(19) Europäisches Patentamt / European Patent Office / Office européen des brevets

(11) **EP 3 677 852 B1**

(12) **EUROPEAN PATENT SPECIFICATION**

(45) Date of publication and mention of the grant of the patent:
**08.10.2025   Bulletin 2025/41**

(21) Application number: **17923844.9**

(22) Date of filing: **03.11.2017**

(51) International Patent Classification (IPC):
**F24F 11/00** (2018.01)    **F24F 11/77** (2018.01)
**F24F 11/86** (2018.01)    **F24F 110/10** (2018.01)
**F24F 110/20** (2018.01)    **F24F 140/40** (2018.01)

(52) Cooperative Patent Classification (CPC):
**F24F 11/77; F24F 11/86;** F24F 11/66;
F24F 2110/10; F24F 2110/20; F24F 2140/40;
Y02B 30/70

(86) International application number:
**PCT/CN2017/109298**

(87) International publication number:
**WO 2019/041541 (07.03.2019 Gazette 2019/10)**

(54) **CONTROL METHOD AND APPARATUS FOR SELF-CLEANING OF AIR CONDITIONER, AND AIR CONDITIONER**

VERFAHREN UND VORRICHTUNG ZUR SELBSTREINIGUNG EINER KLIMAANLAGE UND KLIMAANLAGE

PROCÉDÉ ET APPAREIL DE COMMANDE D'AUTO-NETTOYAGE DE CLIMATISEUR ET CLIMATISEUR ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.09.2017   CN 201710787980**
**04.09.2017   CN 201710787083**

(43) Date of publication of application:
**08.07.2020   Bulletin 2020/28**

(73) Proprietors:
• **Haier Group Corporation**
**Qingdao, Shandong 266101 (CN)**
• **Qingdao Haier Air Conditioner General Corp., Ltd.**
**Qingdao, Shandong 266101 (CN)**

(72) Inventors:
• **WU, Hongjin**
**Qingdao**
**Shandong 266101 (CN)**
• **WANG, Fei**
**Qingdao**
**Shandong 266101 (CN)**
• **FU, Yu**
**Qingdao**
**Shandong 266101 (CN)**
• **XU, Wenming**
**Qingdao**
**Shandong 266101 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
| | |
|---|---|
| EP-A1- 0 893 657 | EP-A1- 3 086 048 |
| EP-A1- 3 183 509 | EP-A2- 1 398 576 |
| CN-A- 104 913 444 | CN-A- 106 288 238 |
| CN-A- 106 839 333 | CN-A- 107 023 969 |
| CN-A- 107 062 539 | GB-A- 2 516 336 |
| JP-A- 2002 054 833 | KR-A- 20140 090 323 |
| US-A1- 2008 315 000 | US-A1- 2012 303 165 |

# Description

## TECHNICAL FIELD

The present invention relates to the field of air conditioner technologies, and more particularly, to a method and a device for controlling an air conditioner, and an air conditioner.

## BACKGROUND

At present, when an existing household air conditioner operates in a cooling mode, a large amount of condensed water is generated, and under appropriate humidity and temperature conditions, a large number of bacteria will breed, and the bacteria will be transported to a room with the supply air, which will seriously affect user comfort and health. According to related research, the bacteria are most likely to breed under high humidity or high temperature conditions.

In addition, during an actual operation of the household air conditioner, when a deviation between a specified temperature and a room temperature is large, a compressor runs at high frequency, at this time, a temperature of a coil of an indoor unit is generally lower (lower than a dew point temperature of an air), and a water vapor in the air is continuously condensed, when the room temperature reaches the specified temperature, the humidity may already be very low, while the general air conditioner does not have a humidification function, at this time, the user will feel dry and uncomfortable; and when a difference between the room temperature and the specified temperature is very small, the air conditioner mostly operates at low frequency, at this time, the temperature of the coil of the indoor unit is generally higher (higher than the dew point temperature of the air), and the water vapor in the air will not be condensed, when the room temperature reaches the specified temperature, the humidity of the air may be too high, and the user will also feel uncomfortable. Therefore, existing methods for controlling the air conditioner often cannot take into account the adjustment of the indoor temperature and humidity, resulting in that the indoor temperature and humidity cannot meet comfort and health requirements of the user.

EP0893657A1 discloses an air conditioner or heat pump system (10) is equipped with a thermostat (20) control which includes a temperature sensor (22) and a humidity sensor (24) and an algorithm to control the low voltage signals to the indoor blower section (33) and the compressor (32) to control operation of each in response to the indoor temperature and humidity conditions and the desired temperature and humidity setpoints.

US20120303165A1 discloses a control system and method for controlling both temperature and humidity in an air conditioning system having a variable-speed compressor and a variable-speed indoor blower. In one embodiment, the control system includes: (1) a temperature control loop in which a target speed of the compressor is determined based on sensed and setpoint temperatures and (2) a humidity control loop, located in the temperature control loop, in which a target speed of the indoor blower is determined based on sensed and setpoint humidities, the target speed of the compressor employable to control the compressor and the target speed of the indoor blower employable to control the indoor blower of the air conditioning system.

CN106839333A discloses a temperature and humidity regulation method of an air conditioner. The method includes the steps: acquiring a temperature setting value and a humidity setting value; acquiring an indoor environment temperature, calculating the difference value between the indoor environment temperature and set temperature, judging whether the difference value between the indoor environment temperature and the set temperature exceeds a set threshold range or not, and controlling the running frequency of a compressor by taking the temperature as a control parameter if the difference value exceeds the set threshold range; acquiring indoor environment humidity and controlling the running frequency of the compressor by taking the indoor environment humidity and the temperature setting value as control parameters if not. When the indoor environment temperature approaches the set temperature of the air conditioner, the running frequency of the compressor can be adjusted according to the indoor environment humidity and set humidity to control the indoor humidity, so that the indoor environment temperature and the indoor environment humidity can be appropriate, and comfort of the variable-frequency air conditioner is improved.

## SUMMARY

Embodiments of the present disclosure provide a method and a device for controlling an air conditioner, and an air conditioner, which aim to solve the problem that existing air conditioners cannot balance an indoor temperature and humidity adjustment. In order to basically understand some aspects of the disclosed embodiments, a brief summary is given below. The summary is not a general comment, nor tends to determine key/critical constituent elements or describe a protection scope of these embodiments, and only aims to present some concepts in a simplified form as an introduction of the following detailed description.

According to a first aspect of the embodiments of the present disclosure, there is provided a method for controlling an air conditioner according to claim 1.

Optionally, when the indoor temperature t is less than or equal to the first preset temperature t1 and greater than a second preset temperature t2, controlling the operating frequency of the compressor and the position of the air deflector according to the second control strategy, wherein the first preset temperature t1 is greater than the second preset temperature t2.

Optionally, when the indoor temperature t is less than or equal to a second preset temperature t2, selecting the corresponding control strategy according to the indoor humidity RH to control the operating frequency of the compressor and/or the rotational speed of the indoor fan, wherein the first preset temperature t1 is greater than the second preset temperature t2.

Optionally, after selecting the corresponding control strategy according to the indoor humidity RH to control the operating frequency of the compressor and/or the rotational speed of the indoor fan, further including: adjusting the position of the air deflector according to the operating frequency of the compressor or the rotational speed of the indoor fan.

Optionally, the second preset temperature t2 is associated with a target temperature T, wherein the target temperature T is set by a user.

Optionally, the first preset temperature t1 is associated with a target temperature T, wherein the target temperature T is set by a user.

Optionally, when the indoor temperature T set by the user is greater than K, the first preset temperature t1=K+N; and when the indoor temperature T set by the user is less than or equal to K, the first preset temperature t1=K+M, where K, N, and M are preset temperatures, N is greater than or equal to M.

Preferably, K=24°C, 25°C, or 26°C. Preferably, N= 2.5°C, 3°C, or 3.5°C. Preferably, M=1.5°C, 2°C, or 2.5°C.

Optionally, when the indoor temperature T set by the user is greater than K, the first preset temperature t1=K+N, and the second preset temperature t2=K+N-Q; and when the indoor temperature T set by the user is less than or equal to K, the first preset temperature t1=K+M, and the second preset temperature t2=K+M-Q, where K, N, M, and Q are preset temperatures, the first preset temperature t1 is greater than the second preset temperature t2, N is greater than or equal to M, and N and M are greater than Q.

Preferably, K=24°C, 25°C, or 26°C. Preferably, N= 2.5°C, 3°C, or 3.5°C. Preferably, M=1.5°C, 2°C, or 2.5°C. Preferably, Q=1°C, 2°C, or 3°C.

Optionally, the first preset humidity Rh is 52%.

Optionally, the controlling the operating frequency of the compressor and/or the rotational speed of the indoor fan according to the third control strategy includes: keeping the operating frequency of the compressor and/or the rotational speed of the indoor fan unchanged; or, controlling the operating frequency of the compressor and/or the rotational speed of the indoor fan by using a dual temperature difference PID method.

Optionally, the controlling the operating frequency of the compressor and/or the rotational speed of the indoor fan by using the dual temperature difference PID method includes: determining a temperature deviation between a temperature difference between a current temperature and a specified temperature and a first temperature difference determined last time; determining the operating frequency F of the compressor according to the temperature deviation, and adjusting the operating frequency F of the compressor accordingly; and determining the rotational speed R of the indoor fan according to the operating frequency F of the compressor, and adjusting the rotational speed R of the indoor fan accordingly.

Optionally, the determining the operating frequency F of the compressor according to the temperature deviation includes: calculating the operating frequency F of the compressor according to the following formula:

$$F=(t1\_Ki \times Dt_n + t1\_Kp \times Pt_n) \times C;$$

where $Dt_n = |Pt_n - Pt_{n-1}|$, $Pt_n = |Tn-Tm|$, t1_Ki is a temperature deviation coefficient, t1_Kp is a temperature difference coefficient, C is an operating frequency coefficient, $Dt_n$ is the temperature deviation, $Pt_n$ is the temperature difference, Tn is the current temperature, and Tm is the specified temperature.

Optionally, when the calculated operating frequency F is greater than a specified upper limit value, setting the operating frequency F of the compressor to the upper limit value; and when the calculated operating frequency F is less than a specified lower limit value, setting the operating frequency F of the compressor to the lower limit value.

Optionally, the determining the rotational speed R of the indoor fan according to the operating frequency F of the compressor includes: the higher the operating frequency F of the compressor, the higher the rotational speed R of the indoor fan.

Optionally, the adjusting the position of the air deflector according to the operating frequency of the compressor or the rotational speed of the indoor fan includes: adjusting the position of the air deflector according to the rotational speed of the indoor fan; when the rotational speed R of the indoor fan is greater than a specified rotational speed R', adjusting the air deflector to the maximum air outlet position; and when the rotational speed R of the indoor fan is less than or equal to the specified rotational speed R', adjusting the air deflector to a minimum air outlet position.

Optionally, when the correction is performed each time, calculating the correction value Dset according to a humidity difference Prh between the indoor humidity RH and a target humidity RHm and a change Drh of the indoor humidity, where Dset=Int{[RH_Ki×Prh+RH_Kp×Drh]×100}/100, Prh=RH-RHm, Drh=RH-RH1, RH1 is an indoor humidity collected last time, and RH_Kp and RH_Ki are specified weighting coefficients respectively; wherein, a selection of RH_Kp is related to a system configuration and an external environment temperature, and a selection of RH_Ki is related to the system configuration and the external environment temperature. If the calculated correction value Dset is greater than the specified upper limit value, the upper limit value is used as the correction value Dset; and if the calculated correction value Dset is less than the specified lower limit value, the lower limit value is used as the correction value Dset.

Optionally, the method further includes: receiving a mode switching instruction, and switching from a current operating mode to a first mode.

Optionally, the first mode is a PMV mode for predicting the average number of votes.

Optionally, when the indoor temperature T set by the user is a specified value, controlling the operating frequency of the compressor and/or the rotational speed of the indoor fan only according to the first control strategy, so as to control the indoor temperature.

Optionally, the specified value is 29°C or 30°C.

Optionally, when the operating frequency of the compressor and/or the rotational speed of the indoor fan are controlled according to the fourth control strategy, determining, by a system, the rotational speed of the indoor fan according to the operating frequency of the compressor; and if the user changes the rotational speed of the indoor fan during the operation of the air conditioner, exiting, by the air conditioner, to control the operating frequency of the compressor and/or the rotational speed of the indoor fan according to the fourth control strategy.

Optionally, when it is detected that the indoor temperature t or the indoor humidity changes and the control strategy needs to be adjusted, keeping the current operating frequency of the compressor and the current rotational speed of the indoor fan for a first specified time, and then switching the control strategy.

Optionally, the first specified time has a range of 30S to 90S. Preferably, the first specified time is 30S, 60S, or 90S.

According to a second aspect of the embodiments of the present disclosure, there is provided a device for controlling an air conditioner according to claim 9.

Optionally, the first preset temperature t1 is associated with a target temperature T, wherein the target temperature T is set by a user.

Optionally, when selecting the corresponding control strategy according to the indoor humidity to control the operating frequency of the compressor and/or the rotational speed of the indoor fan, the adjustment unit is specifically configured to control the operating frequency of the compressor and/or the rotational speed of the indoor fan according to a third control strategy when the indoor humidity RH is less than a first preset humidity Rh, and control the operating frequency of the compressor and/or the rotational speed of the indoor fan according to a fourth control strategy when the indoor humidity RH is greater than or equal to the first preset humidity Rh.

Optionally, when controlling the operating frequency of the compressor and/or the rotating speed of the indoor fan according to the third control strategy, the adjustment unit is specifically configured to keep the operating frequency of the compressor and/or the rotational speed of the indoor fan unchanged, or, control the operating frequency of the compressor and/or the rotational speed of the indoor fan by using a dual temperature difference PID method.

Optionally, when controlling the operating frequency of the compressor and/or the rotating speed of the indoor fan according to the third control strategy, the adjustment unit is specifically configured to keep the operating frequency of the compressor and/or the rotational speed of the indoor fan unchanged; or, control the operating frequency of the compressor and/or the rotational speed of the indoor fan by using a dual temperature difference PID method.

Preferably, the first preset humidity Rh is 52%.

Optionally, the MCU further includes: a determination unit configured to determine a temperature deviation between a temperature difference between a current temperature and a specified temperature and a first temperature difference determined last time, determine the operating frequency F of the compressor according to the temperature deviation and adjust the operating frequency F of the compressor accordingly, and determine the rotational speed R of the indoor fan according to the operating frequency F of the compressor and adjust the rotational speed R of the indoor fan accordingly; and when controlling the operating frequency of the compressor and/or the rotational speed of the indoor fan by using a dual temperature difference PID method, the adjustment unit is specifically configured to adjust the operating frequency F of the compressor accordingly according to the operating frequency F of the compressor determined by the determination unit, and adjust the rotational speed R of the indoor fan accordingly according to the rotational speed of the indoor fan determined by the determination unit.

Optionally, the determination unit is configured to calculate the operating frequency F of the compressor according to the following formula:

$$F=(T'\_Ki \times Dt_n + T'\_Kp \times Pt_n) \times C;$$

where $Dt_n=|Pt_n-Pt_{n-1}|$, $Pt_n=|Tn-Tm|$, $T'\_Ki$ is a temperature deviation coefficient, $T'\_Kp$ is a temperature difference coefficient, C is an operating frequency coefficient, $Dt_n$ is the temperature deviation, $Pt_n$ is the temperature difference, Tn is the current temperature, and Tm is the specified temperature.

Optionally, when the calculated operating frequency F is greater than a specified upper limit value, the operating frequency F of the compressor is set to the upper limit value; and when the calculated operating frequency F is less than a specified lower limit value, the operating frequency F of the compressor is set to the lower limit value.

Optionally, the determining the rotational speed R of the indoor fan according to the operating frequency F of the compressor includes: the higher the operating frequency F of the compressor, the higher the rotational speed R of the indoor fan.

Optionally, when adjusting the position of the air deflector according to the operating frequency of the compressor or the rotational speed of the indoor fan, the adjustment unit is specifically configured to adjust the air deflector to the maximum air outlet position when the rotational speed R of the indoor fan is greater than a specified rotational speed R', and adjust the air deflector to a minimum air outlet position when the rotational speed R of the indoor fan is less than or equal to the specified rotational speed R'.

Optionally, the MCU further includes: a calculation unit configured to, when the indoor temperature t is less than or equal to the first preset temperature t1 and when the indoor humidity RH is greater than or equal to the first preset humidity Rh, calculate a correction value of the target temperature T to obtain a corrected temperature Tx, determine the operating frequency F of the compressor according to the corrected target temperature Tx, and determine the rotational speed R of the indoor fan according to the operating frequency F of the compressor, wherein the target temperature T is set by a user; and the adjustment unit is further configured to adjust the operating frequency of the compressor accordingly according to the operating frequency F of the compressor determined by the calculation unit, and adjust the rotational speed of the indoor fan accordingly the rotational speed R of the indoor fan determined by the calculation unit.

Optionally, the calculation unit is configured to obtain the corrected temperature Tx according to Tx=T-Dset when the correction is performed for the first time, and obtain the corrected temperature Tx according to Tx=Tx1-Dset when the correction is performed for the second and subsequent times, where Tx is a temperature after this correction, Tx1 is a temperature after the previous correction, and Dset is a correction value. Optionally, Dset is a fixed value, or, Dset is a variable.

Optionally, when the correction is performed each time, calculating the correction value Dset according to a humidity difference Prh between the indoor humidity RH and a target humidity RHm and a change Drh of the indoor humidity, where Dset=Int{[RH_Ki×Prh+RH_Kp×Drh]×100}/100, Prh=RH-RHm, Drh=RH-RH1, RH1 is an indoor humidity collected last time, and RH_Kp and RH_Ki are specified weighting coefficients respectively; wherein, a selection of RH_Kp is related to a system configuration and an external environment temperature, and a selection of RH_Ki is related to the system configuration and the external environment temperature. If the calculated correction value Dset is greater than the specified upper limit value, the upper limit value is used as the correction value Dset; and if the calculated correction value Dset is less than the specified lower limit value, the lower limit value is used as the correction value Dset.

Optionally, the calculation unit is configured to calculate the operating frequency F of the compressor according to a temperature difference PT between the indoor temperature t and the corrected target temperature Tx and a change DT of the indoor temperature.

Optionally, F=T_Kp×PT+T_Ki×DT; where PT=t-Tx, DT=t-t', t' is an indoor temperature collected last time, and T_Kp and T_Ki are weighting coefficients respectively. A selection of T_Kp is related to a system configuration and an external environment temperature, and a selection of T_Ki is related to the system configuration and the external environment temperature. T_Kp has a range of 1 to 8, and T_Ki has a range of 1 to 10. Preferably, T_Kp =3, 4, 5, 6, or 7, and T_Ki =3, 4, 5, 6, or 7.

Optionally, when the calculated operating frequency F is greater than a specified upper limit value, the operating frequency F of the compressor is set to the upper limit value; and when the calculated operating frequency F is less than a specified lower limit value, the operating frequency F of the compressor is set to the lower limit value.

Optionally, the determining the rotational speed R of the indoor fan according to the operating frequency F of the compressor includes: the higher the operating frequency F of the compressor, the higher the rotational speed R of the indoor fan.

According to a third aspect of the embodiments of the present disclosure, there is provided an air conditioner including a compressor and an indoor fan, and further including any of the foregoing devices.

The technical solution provided by the embodiments of the present disclosure may include following beneficial effects:

in the cooling mode, the indoor temperature and the indoor humidity are collected in real time; different control strategies are determined according to the relationship between the indoor temperature and the preset temperature and the indoor humidity, to take into account the adjustment of the indoor temperature and the indoor humidity; and thus one or more of the operating frequency of the compressor, the rotational speed of the indoor fan and the position of the air deflector are adjusted, so that both the indoor temperature and the humidity can meet the requirements of user comfort, thereby avoiding the influence of fluctuations in other environmental parameters caused by adjusting a single indoor environmental parameter.

It should be understood that both the foregoing general description and the following detailed description are exemplary and explanatory only and are not intended to limit the present disclosure, which is only limited by the appended set of claims.

## BRIEF DESCRIPTION OF THE DRAWINGS

The accompanying drawings, which are incorporated in and constitute a part of this description, illustrate embodiments consistent with the present disclosure and, together with the description, serve to explain the principles of the present disclosure.

Fig. 1 is a flowchart illustrating a method for controlling an air conditioner according to an exemplary embodiment.
Fig. 2 is a flowchart illustrating a method for controlling an air conditioner according to an exemplary embodiment.
Fig. 3 is a flowchart illustrating a method for controlling an air conditioner according to an exemplary embodiment.
Fig. 4 is a flowchart illustrating a method for controlling an air conditioner according to an exemplary embodiment.
Fig. 5 is a flowchart illustrating a method for controlling an air conditioner according to an exemplary embodiment.
Fig. 6 is a structural block diagram illustrating a device for controlling an air conditioner according to an exemplary embodiment.
Fig. 7 is a structural block diagram illustrating a device for controlling an air conditioner according to an exemplary embodiment.
Fig. 8 is a structural block diagram illustrating a device for controlling an air conditioner according to an exemplary embodiment.

DETAILED DESCRIPTION

The following description and accompanying drawings fully illustrate the specific implementation solutions of the present disclosure so that a person skilled in the art can practice them. The embodiments merely represent possible changes. Unless otherwise specified explicitly, the individual component and function are optional and the operation sequence may be changed. Parts and characteristics of some implementation solutions may be included in or replace parts and characteristics of other implementation solutions. The scope of the implementation solutions of the present disclosure includes the whole scope of the claims and all available equivalents of the claims. As used herein, each implementation solution may be independently or generally expressed by "present disclosure", which is merely for convenience. As a matter of fact, if more than one disclosure is disclosed, it does not mean that the scope of the application is automatically limited to any single disclosure or disclosure concept. As used herein, terms such as "first" and "second" are merely for distinguishing one entity or operation from another entity or operation and do not require or imply any actual relationship or sequence among these entities or operations. Moreover, terms such as "comprise" and "include" or any other variants indicate a non-exclusive inclusion, so that a process, method or device including a series of elements not only include these elements, but also include other elements not explicitly listed. Without further restrictions, the element defined by the statement "includes a/an ..." does not exclude the existence of other identical elements in the process, method or device that includes the element. As used herein, each embodiment is described progressively, and contents focally described in each embodiment are different from those in other embodiments. The same or similar parts among each of the embodiments may be referred to each other. Regarding a structure, a product and the like disclosed in the embodiments, since they are corresponding to parts disclosed in the embodiments, their description is relatively simple and relevant contents can be referred to the description in the method part.

An air conditioner is already a common electrical appliance in daily life, which can adjust an indoor temperature, that is, increase or decrease the temperature, so that the indoor temperature matches a temperature preset by a user. However, in the process of a temperature adjustment, a humidity of an indoor environment may be changed, for example, when the temperature of the indoor environment is reduced by increasing the amount of refrigerant, a surface temperature of an indoor heat exchanger may decrease, which results that the amount of condensed water vapor in the air flowing through the indoor heat exchanger may increase, and results that the humidity of the indoor environment will decrease, and thus the user will often feel dry and uncomfortable. Similarly, when the indoor humidity is adjusted by the air conditioner, the temperature of the indoor environment may also be changed, for example, when the surface temperature of the indoor heat exchanger is reduced by increasing the amount of the refrigerant to further dehumidify the indoor environment, the surface temperature of the indoor heat exchanger may decrease, which results that the temperature of the air blown out through the indoor unit will decrease, and further results that the temperature of the indoor environment will be reduced, and thus the user will often feel cold. Therefore, the existing methods for controlling the air conditioner, which can only adjust a single parameter such as temperature or humidity, cannot meet the requirement of the user comfort.

A position of an air deflector of the air conditioner includes a maximum air outlet position and a minimum air outlet position. The maximum air outlet position is that the air deflector is in a middle position, at this time, the air deflector has the least resistance to the air outlet. The minimum air outlet position is that the air deflector swings to a position where the resistance to the air outlet is the greatest, including a maximum angle at which the air deflector can swing, at this time, the air outlet blows the air downwards under an action of the air deflector, or the air outlet blows the air upwards under the action of the air deflector before completely covering the air outlet.

In this embodiment, the minimum air outlet position is that the air outlet blows the air upwards under the action of the air deflector, thereby ensuring that the air blown by the air conditioner does not directly blow to a human body during the adjustment process, accelerating a mixing speed of an upper-level air and a lower-level air, and accelerating the adjustment process to make the temperature of the air suitable for the user.

In one embodiment, a method for controlling an air conditioner, including: when the air conditioner is in a cooling mode, collecting an indoor temperature t and an indoor humidity RH;

when the indoor temperature t is greater than a first preset temperature t1, controlling an operating frequency of a compressor and/or a rotational speed of an indoor fan according to a first control strategy; and

when the indoor temperature t is less than or equal to the first preset temperature t1, selecting a corresponding control strategy according to the indoor humidity RH to control the operating frequency of the compressor and/or the rotational speed of the indoor fan; or, controlling the operating frequency of the compressor and a position of an air deflector according to a second control strategy.

In the cooling mode, the indoor temperature and the indoor humidity are collected in real time; different control strategies are determined according to the relationship between the indoor temperature and the preset temperature and the indoor humidity, to take into account the adjustment of the indoor temperature and the indoor humidity; and thus one or more of the operating frequency of the compressor, the rotational speed of the indoor fan and the position of the air deflector are adjusted, so that both the indoor temperature and the humidity can meet the requirements of user comfort, thereby avoiding the influence of fluctuations in other environmental parameters caused by adjusting a single indoor environmental parameter.

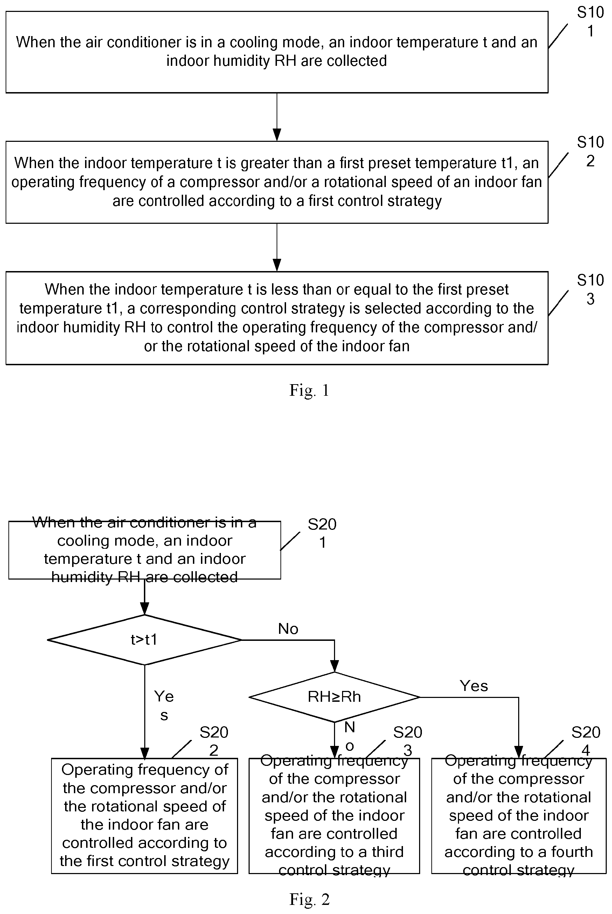

Fig. 1 is a flowchart illustrating a method for controlling an air conditioner according to an exemplary embodiment. As shown in Fig. 1, the method includes:

S101, when the air conditioner is in a cooling mode, an indoor temperature t and an indoor humidity RH are collected.

In this embodiment, an operation mode of the air conditioner can be adjusted through a remote controller of the air conditioner, a control panel on an indoor unit of the air conditioner or a mobile terminal with a remote control function for the air conditioner, for example, the air conditioner can be controlled to perform a cooling mode by clicking a cooling mode button on the remote controller.

Generally, the air conditioner is installed in an indoor space such as a living room, a bedroom and a conference room. Therefore, a current temperature and humidity of the indoor space such as the living room, the bedroom or the conference room where the air conditioner is installed can be obtained through S101, the current temperature and humidity is the indoor temperature t and indoor humidity RH obtained in real time in this process of the present disclosure.

The air conditioner is provided with a temperature sensor for detecting a current temperature of an indoor environment. A sensing end of the temperature sensor can be provided on an air inlet or an outer wall of a casing of the air conditioner, so that the current temperature detected by the first temperature sensor can be the same as or similar to an actual temperature of the indoor environment, thereby improving the accuracy of adjusting the operating frequency of the compressor and the rotational speed of the indoor fan of the air conditioner according to the current temperature of the indoor environment.

The air conditioner is provided with a humidity sensor for detecting a current humidity of the indoor environment, the current humidity is the indoor humidity RH obtained in real time in this process of the present disclosure. A sensing end of the humidity sensor can be provided on the air inlet or the outer wall of the casing of the air conditioner, so that the current humidity detected by the humidity sensor can be the same as or similar to an actual humidity of the indoor environment, thereby improving the accuracy of adjusting the operating frequency of the compressor and the rotational speed of the indoor fan of the air conditioner according to the current humidity of the indoor environment.

S102, when the indoor temperature t is greater than a first preset temperature t1, an operating frequency of a compressor and/or a rotational speed of an indoor fan are controlled according to a first control strategy.

S103, when the indoor temperature t is less than or equal to the first preset temperature t1, a corresponding control strategy is selected according to the indoor humidity RH to control the operating frequency of the compressor and/or the rotational speed of the indoor fan.

An air-conditioning system is preset with a first preset temperature t1 as a judgment condition for controlling the operating frequency of the compressor and the rotational speed of the indoor fan. When the collected indoor temperature t is greater than the first preset temperature t1, the indoor temperature is higher, a temperature deviation is larger, a cooling process is required, and thus the operating frequency of the compressor and/or the rotational speed of the indoor fan are controlled according to the first control strategy to reduce the indoor temperature. When the indoor temperature t is less than or equal to the first preset temperature t1, the indoor temperature t meets the cooling needs of the user, at this time, the indoor environmental humidity needs to be adjusted to improve the user comfort; the corresponding control strategy is selected according to the indoor humidity RH to unilaterally control the operating frequency of the compressor or the rotational speed of the indoor fan, or simultaneously adjust the operating frequency of the compressor or the rotational speed of the indoor fan to speed up the adjustment of the humidity.

In this embodiment, in the cooling mode, the indoor temperature and the indoor humidity are collected in real time; different control strategies are determined according to the relationship between the indoor temperature and the preset temperature and the indoor humidity, to take into account the adjustment of the indoor temperature and the indoor humidity; and thus the operating frequency of the compressor and the rotational speed of the indoor fan are adjusted, so that both the indoor temperature and the humidity can meet the requirements of user comfort, thereby avoiding the influence of fluctuations in other environmental parameters caused by adjusting a single indoor environmental parameter.

In the foregoing embodiment, the first preset temperature t1 is associated with a target temperature T, wherein the target temperature T is set by a user. The user can set target temperature T through a remote controller of the air conditioner, a control panel on an indoor unit of the air conditioner, or a mobile terminal with a remote control function for the air conditioner.

In some embodiments, when the indoor temperature T set by the user is greater than K, the first preset temperature t1=K+N; and when the indoor temperature T set by the user is less than or equal to K, the first preset temperature t1=K+M, where K, N and M are preset temperatures, N is greater than or equal to M.

Preferably, K=24°C, 25°C, or 26°C. Preferably, N= 2.5°C, 3°C, or 3.5°C. Preferably, M=1.5°C, 2°C, or 2.5°C.

For example, when K=25°C, N=2.5°C, and M=1.5°C, if the indoor temperature T set by the user is 26°C, the first preset temperature t1=26°C+2.5°C=28.5°C; and if the indoor temperature T is 25°C, t1=25°C+1.5°C=26.5°C.

Fig. 2 is a flowchart illustrating a method for controlling an air conditioner according to an exemplary embodiment. As shown in Fig. 2, the method includes:

S201, when the air conditioner is in a cooling mode, an indoor temperature t and an indoor humidity RH are collected. When the indoor temperature t is greater than a first preset temperature t1, that is, t>t1, S202 is performed; and when the indoor temperature t is less than or equal to the first preset temperature t1, that is, t≤t1, if the indoor humidity RH is less than a first preset humidity Rh, that is, RH<Rh, S203 is performed; and if the indoor humidity RH is greater than or equal to the first preset humidity Rh, that is, RH≥Rh, S204 is performed.

In S202, the indoor temperature t is greater than the first preset temperature t1, the temperature deviation is larger, a cooling process is required, and thus the operating frequency of the compressor and/or the rotational speed of the indoor fan are controlled according to the first control strategy, so as to reduce the indoor temperature.

In S203, the operating frequency of the compressor and/or the rotational speed of the indoor fan are controlled according to a third control strategy.

In S204, the operating frequency of the compressor and/or the rotational speed of the indoor fan are controlled according to a fourth control strategy.

In some embodiments, in S203, the operating frequency of the compressor is kept unchanged.

In some embodiments, in S203, the rotational speed of the indoor fan is kept unchanged.

In some embodiments, in S203, the operating frequency of the compressor and the rotational speed of the indoor fan are kept unchanged.

In some embodiments, in S203, the operating frequency of the compressor and/or the rotational speed of the indoor fan are controlled by using a dual temperature difference PID method, so as to ensure comfortable indoor air outlet and improve indoor relative humidity at the same time.

In some embodiments, in S204, the indoor temperature t is less than or equal to the first preset temperature t1, the indoor humidity RH is greater than or equal to the first preset humidity Rh, the indoor environment needs to be dehumidified, and thus, the controlling the operating frequency of the compressor and/or the rotational speed of the indoor fan according to the fourth control strategy includes: performing one or more corrections on the target temperature T to obtain a corrected target temperature Tx, wherein the target temperature T is set by a user; determining the operating frequency F of the compressor according to the corrected target temperature Tx, and adjusting the operating frequency F of the compressor accordingly; and determining the rotational speed R of the indoor fan according to the operating frequency F of the compressor, and adjusting the rotational speed R of the indoor fan accordingly.

In some embodiments, after S203 and S204, the method further includes: adjusting the position of the air deflector according to the operating frequency of the compressor or the rotation speed of the indoor fan.

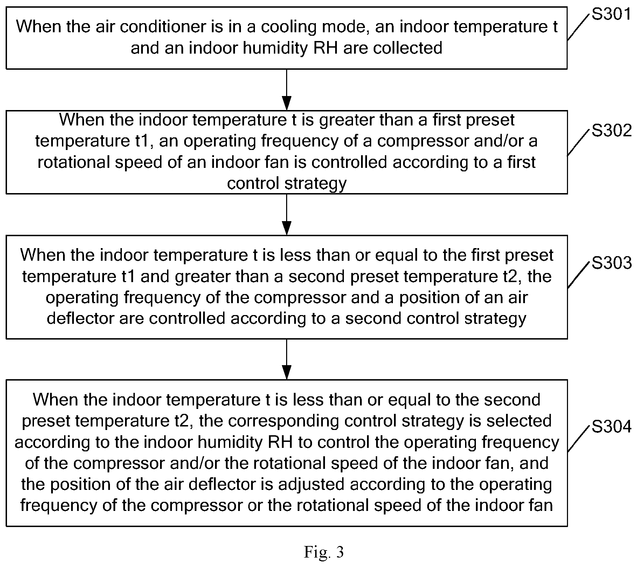

Fig. 3 is a flowchart illustrating a method for controlling an air conditioner according to an exemplary embodiment. In this embodiment, only steps different from those of the foregoing embodiments will be described. As shown in Fig. 3, the method includes:

S301, when the air conditioner is in a cooling mode, an indoor temperature t and an indoor humidity RH are collected.

S302, when the indoor temperature t is greater than a first preset temperature t1, an operating frequency of a compressor and/or a rotational speed of an indoor fan is controlled according to a first control strategy.

S303, when the indoor temperature t is less than or equal to the first preset temperature t1 and greater than a second preset temperature t2, the operating frequency of the compressor and a position of an air deflector are controlled according to a second control strategy.

S304, when the indoor temperature t is less than or equal to the second preset temperature t2, the corresponding control strategy is selected according to the indoor humidity RH to control the operating frequency of the compressor and/or the rotational speed of the indoor fan, and the position of the air deflector is adjusted according to the operating frequency of the compressor or the rotational speed of the indoor fan.

The air-conditioning system is preset with a first preset temperature t1 as a judgment condition for controlling the operating frequency of the compressor, the rotational speed of the indoor fan, and the position of the air deflector. When the collected indoor temperature t is greater than the first preset temperature t1, the indoor temperature is higher, a temperature deviation is larger, a cooling process is required, and thus the operating frequency of the compressor and/or the rotational speed of the indoor fan are controlled according to the first control strategy to reduce the indoor temperature. When the indoor temperature t is less than or equal to the first preset temperature t1 and greater than the second preset temperature t2, the indoor temperature t is close to a specified temperature, and the indoor temperature t meets the cooling needs of the user, at this time, the operating frequency of the compressor and the position of the air deflector are controlled according to the second control strategy, so as to reduce the energy consumption of the air conditioner and save energy. When the indoor temperature t is less than or equal to a second preset temperature t2, the corresponding control strategy is selected according to the collected indoor humidity RH to control the operating frequency of the compressor or the position of the air deflector, or simultaneously control the operating frequency of the compressor, the rotational speed of the indoor fan and the position of the air deflector to adjust the temperature and humidity of the indoor environment, so as to improve the user comfort.

In this embodiment, in the cooling mode, the indoor temperature and the indoor humidity are collected in real time; different control strategies are determined according to the relationship between the indoor temperature and the preset temperature and the indoor humidity, to take into account the adjustment of the indoor temperature and the indoor humidity; and thus one or more of the operating frequency of the compressor, the rotational speed of the indoor fan and the position of the air deflector are adjusted, so that both the indoor temperature and the humidity can meet the requirements of the user comfort, thereby avoiding the influence of fluctuations in other environmental parameters caused by adjusting a single indoor environmental parameter.

In the foregoing embodiments, the first preset temperature t1 and the second preset temperature t2 are associated with the target temperature T, wherein the target temperature T is set by the user. The user can set target temperature T through the remote controller of the air conditioner, the control panel on an indoor unit of the air conditioner, or the mobile terminal with the remote control function for the air conditioner.

In some embodiments, when the indoor temperature T set by the user is greater than K, the first preset temperature t1=K+N, and the second preset temperature t2=K+N-Q; and when the indoor temperature T set by the user is less than or equal to K, the first preset temperature t1=K+M, and the second preset temperature t2=K+M-Q, where K, N, M and Q are preset temperatures, the first preset temperature t1 is greater than the second preset temperature t2, N is greater than or equal to M, and N and M are greater than Q.

Preferably, K=24°C, 25°C, or 26°C. Preferably, N= 2.5°C, 3°C, or 3.5°C. Preferably, M=1.5°C, 2°C, or 2.5°C. Preferably, Q=1°C, 2°C, or 3°C.

For example, when K=25°C, N=2.5°C, M=1.5°C, and Q=1°C, if the indoor temperature T set by the user is 26°C, the first preset temperature t1=26°C+2.5°C=28.5°C, and the second preset temperature t2=26°C+2.5°C-1°C=27.5°C; and if the indoor temperature T is 25°C, t1=25°C+1.5°C=26.5°C, and t2=25°C+1.5°C-1°C =25.5°C.

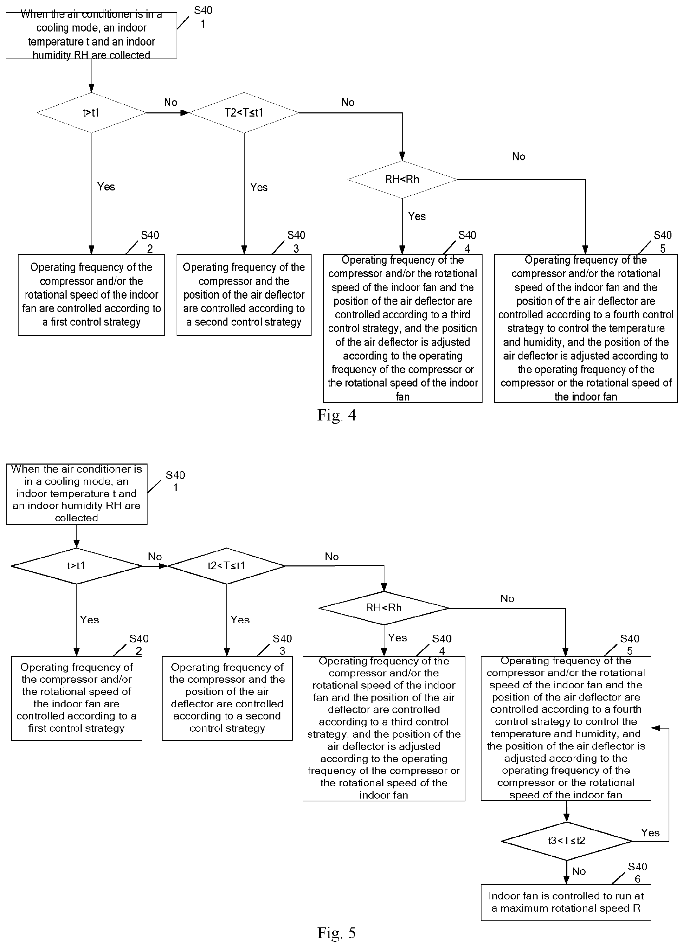

Fig. 4 is a flowchart illustrating a method for controlling an air conditioner according to an exemplary embodiment. As shown in Fig. 4, the method includes:

S401, when the air conditioner is in a cooling mode, an indoor temperature t and an indoor humidity RH are collected. When the indoor temperature t is greater than a first preset temperature t1, that is, t>t1, S402 is performed; when the indoor temperature t is less than or equal to the first preset temperature t1 and greater than a second preset temperature t2, that is, t2<t≤t1, S403 is performed; and when the indoor temperature t is less than or equal to the second preset temperature t2, that is, t≤t2, if the indoor humidity RH is less than a first preset humidity Rh, that is, RH<Rh, S403 is performed; and if the indoor humidity RH is greater than or equal to the first preset humidity Rh, that is, RH≥Rh, S405 is performed.

In S402, the indoor temperature t is greater than the first preset temperature t1, the temperature deviation is larger, a cooling process is required, and thus the operating frequency of the compressor and/or the rotational speed of the indoor fan are controlled according to a first control strategy, so as to reduce the indoor temperature.

In S403, when the indoor temperature t is less than or equal to the first preset temperature t1 and greater than a second preset temperature t2, the indoor temperature t is close to a specified temperature set by the user, the operating frequency of the compressor and the position of the air deflector are controlled according to a second control strategy, so as to reduce the energy consumption of the air conditioner and save energy.

In S404, the operating frequency of the compressor and/or the rotational speed of the indoor fan and the position of the air deflector are controlled according to a third control strategy, and the position of the air deflector is adjusted according to the operating frequency of the compressor or the rotational speed of the indoor fan.

In S405, the operating frequency of the compressor and/or the rotational speed of the indoor fan and the position of the air deflector are controlled according to a fourth control strategy to control the temperature and humidity, and the position of the air deflector is adjusted according to the operating frequency of the compressor or the rotational speed of the indoor fan.

In some embodiments, in S403, the controlling the operating frequency of the compressor and the position of the air deflector according to the second control strategy includes: adjusting the operating frequency F of the compressor to a specified frequency f1, and adjusting the air deflector to a maximum air outlet position.

In some embodiments, in S404, the operating frequency of the compressor and/or the rotational speed of the indoor fan are controlled by using a dual temperature difference PID method, so as to ensure comfortable indoor air outlet and improve indoor relative humidity at the same time.

In some embodiments, in S405, the indoor temperature t is less than or equal to the first preset temperature t1, the indoor humidity RH is greater than or equal to the first preset humidity Rh, the indoor environment needs to be dehumidified, and thus, the controlling the operating frequency of the compressor and/or the rotational speed of the indoor fan according to the fourth control strategy includes: performing one or more corrections on the target temperature T to obtain a corrected target temperature Tx, wherein the target temperature T is set by a user; determining the operating frequency F of the compressor according to the corrected target temperature Tx, and adjusting the operating frequency F of the compressor accordingly; and determining the rotational speed R of the indoor fan according to the operating frequency F of the compressor, and adjusting the rotational speed R of the indoor fan accordingly.

In any of the foregoing embodiments, preferably, the first preset humidity Rh is 52%, and a gold humidity is 52% after being statistically calculated by means of big data. Under this humidity, human body comfort is the best, and at the same time, the growth of bacteria and mold in this environment can also be suppressed.

Fig. 5 is a flowchart illustrating a method for controlling an air conditioner according to an exemplary embodiment.

In some embodiments, as shown in Fig. 5, when the indoor temperature t is less than or equal to the second preset temperature t2 and the indoor humidity RH is greater than or equal to the first preset humidity Rh, S406, the operating frequency of the compressor and/or the rotational speed of the indoor fan are controlled according to the fourth control strategy is performed; when the indoor temperature t is greater than a third preset temperature t3, that is, t3<t≤t2, if the rotational speed R of the indoor fan is less than or equal to the specified rotational speed R', the air deflector is adjusted to a minimum air outlet position; and if the rotational speed R of the indoor fan is greater than the specified rotational speed R', the air deflector is adjusted to the maximum air outlet position; and when the indoor temperature t is less than or equal to the third preset temperature t3, that is, t≤t3, the indoor fan is adjusted to run at a maximum rotational speed, and the air deflector is adjusted to the minimum air outlet position, at this time, the indoor temperature is too low, a temperature of an upper-level air is high, and a temperature of a lower-level air contacted by a human body is low, the indoor fan is adjusted to run at the maximum rotational speed, and the air deflector is adjusted to the minimum air outlet position, thereby accelerating a mixing speed of the upper-level air and the lower-level air, and making the temperature of the air contacted by the user suitable.

In any of the foregoing embodiments, before controlling the operating frequency of the compressor, the rotational speed of the indoor fan, or the position of the air deflector according to the indoor temperature t and the indoor humidity RH, the method further includes: receiving a mode switching instruction, and switching from a current operating mode to a first mode.

The mode switching instruction is issued by a remote controller of the air conditioner, a control panel on an indoor unit of the air conditioner or a mobile terminal with a remote control function for the air conditioner. The first mode is a PMV mode. The PMV mode is an intelligent control mode for the human body comfort, after a PMV mode button on the remote controller of the air conditioner, the control panel on the indoor unit of the air conditioner or the mobile terminal with the remote control function for the air conditioner is pressed by the user, the air conditioner will switch to the PMV mode after receiving a PMV mode instruction, and collect parameters such as the indoor temperature, the indoor humidity, the rotational speed, a heat radiation, amounts of clothing, and amounts of activity. PMV is a thermal comfort index of the human body, which can be characterized as a function of six parameters, namely, an indoor air temperature Ta, an average radiation temperature Tr, an indoor air flow rate Va, an indoor air humidity φa, a human metabolic rate M, and a clothing thermal resistance CLO, that is, PMV=f (Ta, Tr, Va, φa, M, CLO). When PMV=0, it means that the indoor thermal environment is the best thermal comfort state.

In any of the foregoing embodiments, the controlling the operating frequency of the compressor and/or the rotational speed of the indoor fan by using the dual temperature difference PID method specifically includes the following steps: determining a temperature deviation between a temperature difference between a current temperature and a specified temperature and a first temperature difference determined last time; determining the operating frequency F of the compressor according to the temperature deviation, and adjusting the operating frequency F of the compressor accordingly; and determining the rotational speed R of the indoor fan according to the operating frequency F of the compressor, and adjusting the rotational speed R of the indoor fan accordingly.

Specifically, the operating frequency F of the compressor is determined according to the temperature deviation through the following formula (1):

$$F=(T'\_Ki \times Dt_n + T'\_Kp \times Pt_n) \times C; \qquad (1)$$

where $Dt_n=|Pt_n-Pt_{n-1}|$, $Pt_n=|Tn-Tm|$, $T'\_Ki$ is a temperature deviation coefficient, $T'\_Kp$ is a temperature difference coefficient, C is an operating frequency coefficient, $Dt_n$ is the temperature deviation, $Pt_n$ is the temperature difference, Tn is the current temperature, and Tm is the specified temperature.

In some embodiments, the operating frequency F of the compressor is provided with an upper limit value and a lower limit value, so as to ensure the operation efficiency of the air conditioner and the service life of the compressor of the air conditioner. When the calculated operating frequency F is greater than a specified upper limit value, the operating frequency F of the compressor is set to the upper limit value; and when the calculated operating frequency F is less than a specified lower limit value, the operating frequency F of the compressor is set to the lower limit value.

Preferably, a range of the operating frequency F of the compressor is (36Hz, 65Hz), wherein the upper limit value and the lower limit value are determined by a large number of experiments and statistics carried out by different air-conditioning models and compressor models during commissioning stage. For example, $Dt_n=2$, $Pt_n=10$, $T'\_Ki=4$, $T'\_Kp=6$, C=1, according to the formula (1), $F=(4 \times 2+6 \times 10) \times 1=68Hz$. The calculated operating frequency F is greater than the upper limit value of 65 Hz, and thus, the operating frequency F of the compressor is set to the upper limit value of 65 Hz.

The determining the rotational speed R of the indoor fan according to the operating frequency F of the compressor includes: the higher the operating frequency F of the compressor, the higher the rotational speed R of the indoor fan.

An alternative method is to obtain the rotational speed of the indoor fan by searching from a table storing a preset corresponding relationship between the operating frequency F of the compressor and the rotational speed R of the indoor fan. The specific corresponding relationship is shown in Table 1:

Table 1

| Operating frequency of the compressor (Hz) | Rotational speed of the indoor fan (r/min) |
|---|---|
| 60~ | 950 |
| 55~59 | 850 |
| 50~54 | 800 |
| 45~49 | 750 |
| 40~44 | 750 |
| 35~39 | 700 |

When the indoor fan runs at a high speed, the temperature of the coil is high, the ratio of the sensible heat is high, and the amount of the dehumidification is small; and when the indoor fan runs at a low speed, the temperature of the coil is low, the ratio of the latent heat is high, and the amount of the dehumidification is large.

The rotational speeds of the indoor fans corresponding to different operating frequency ranges of the compressor are different, the rotational speed of the indoor fan corresponding to a low frequency range is low, and the rotational speed of the indoor fan corresponding to a high frequency range is high, although the lower a wind speed is at a certain frequency, the larger the amount of the dehumidification is, the excessively low wind speed in the high frequency range will cause the risk of freezing of the coil in the indoor unit.

Another alternative method is to calculate the rotational speed R of the indoor fan according to the operating frequency F of the compressor and the following formula (2):

$$R = 15 \times F + 50. \qquad (2)$$

In some embodiments, the adjusting the position of the air deflector according to the rotational speed R of the indoor fan includes: when the rotational speed R of the indoor fan is greater than a specified rotational speed R', adjusting the air deflector to the maximum air outlet position; and when the rotational speed R of the indoor fan is less than or equal to the specified rotational speed R', adjusting the air deflector to a minimum air outlet position. When the rotational speed R of the indoor fan is greater than the specified rotational speed R', it is indicated that the rotational speed R is the high speed, at this time, the air deflector is adjusted to the maximum air outlet position; and when the rotational speed R of the indoor fan is less than or equal to the specified rotational speed R', it is indicated that the rotational speed R is the low speed, at this time, the air deflector is adjusted to the minimum air outlet position. For example, R' is 800r/min, when the rotational speed is 850r/min, the air deflector is adjusted to the maximum air outlet position; and when the rotational speed is 750r/min, the air deflector is adjusted to the minimum air outlet position.

In some embodiments, the adjusting the position of the air deflector according to the operating frequency F of the compressor includes: when the operating frequency F of the compressor is greater than a specified operating frequency F', adjusting the air deflector to the maximum air outlet position; and when the operating frequency F of the compressor is less than or equal to the specified operating frequency F', adjusting the air deflector to a minimum air outlet position. When the operating frequency F of the compressor is greater than the specified operating frequency F', it is indicated that the operating frequency F is a high frequency, at this time, the air deflector is adjusted to the maximum air outlet position; and when the operating frequency F of the compressor is less than or equal to the specified operating frequency F', it is indicated that the operating frequency F is a low frequency, at this time, the air deflector is adjusted to the minimum air outlet position. For example, F' is 50Hz, when the operating frequency F is 60Hz, the air deflector is adjusted to the maximum air outlet position; and when the operating frequency F is 40Hz, the air deflector is adjusted to the minimum air outlet position.

In any of the foregoing embodiments, the performing one or more corrections on the target temperature T during the controlling the operating frequency of the compressor and/or the rotational speed of the indoor fan according to the fourth control strategy includes: when the correction is performed for the first time, Tx=T-Dset; and when the correction is performed for the second and subsequent times, Tx=Tx1-Dset.

Tx is a temperature after this correction, Tx1 is a temperature after the previous correction, and Dset is a correction value. Optionally, Dset is a fixed value, or, Dset is a variable.

In some embodiments, when the correction is performed each time, the correction value Dset is calculated according to a humidity difference Prh between the indoor humidity RH and a target humidity RHm and a change Drh of the indoor humidity, specifically, Dset is calculated according to the following formula (3):

$$Dset = Int\{[RH\_Ki \times Prh + RH\_Kp \times Drh] \times 100\}/100; \qquad (3)$$

where Prh=RH-RHm, Drh=RH-RH1, RH1 is an indoor humidity collected last time, and RH_Kp and RH_Ki are specified weighting coefficients respectively; wherein, a selection of RH_Ki is related to a system configuration and an external environment temperature, and a selection of RH_Kp is related to the system configuration and the external environment temperature. For example, the higher the external environment temperature, the larger RH_Ki or RH_Kp. The higher the external environment temperature, the greater the adjustment range of various parameters required reaching the target temperature or humidity, and thus, the greater the weighting coefficients are. The external environment temperature includes an indoor environment temperature or an outdoor environment temperature. In the system configuration, the selection of RH_Ki and RH_Kp is related to a throttling device being a capillary or an expansion valve, a displacement performance of the compressor or a size of a condenser and an evaporator.

In some embodiments, in order to prevent overshoot, the correction value Dset is provided with an upper limit and a lower limit. If the calculated correction value Dset is greater than a specified upper limit value, the upper limit value is used as the correction value Dset; and if the calculated correction value Dset is less than a specified lower limit value, the lower limit value is used as the correction value Dset. For example, the upper limit value is 0.2, and the lower limit value is -0.2; when the calculated correction value Dset is 0.3, the upper limit value 0.2 is taken as the correction value Dset, and when the calculated correction value Dset is -0.4, the lower limit value -0.2 is taken as the correction value Dset.

In some embodiments, the determining the operating frequency F of the compressor according to the corrected target temperature Tx includes: calculating the operating frequency F of the compressor according to a temperature difference PT between the indoor temperature t and the corrected target temperature Tx and a change DT of the indoor temperature, specifically, F is calculated according to the following formula (4):

$$F=T\_Ki \times DT+T\_Kp \times PT; \qquad (4)$$

where PT=t-Tx, DT=t-t'; t' is an indoor temperature collected last time, and T_Kp and T_Ki are weighting coefficients respectively; wherein, a selection of T_Ki is related to the system configuration and the external environment temperature, and a selection of T_Kp is related to the system configuration and the external environment temperature. For example, the higher the external environment temperature, the larger T_Ki or T_Kp. The higher the external environment temperature, the greater the adjustment range of various parameters required reaching the target temperature or humidity, and thus, the greater the weighting coefficients are. The external environment temperature includes an indoor environment temperature or an outdoor environment temperature. In the system configuration, the selection of T_Ki and T_Kp is related to a throttling device being a capillary or an expansion valve, a displacement performance of the compressor or a size of a condenser and an evaporator.

T_Ki has a range of 1 to 10, and T_Kp has a range of 1 to 8. Preferably, T_Ki =3, 4, 5, 6, or 7, and T_Kp =3, 4, 5, 6, or 7.

In some embodiments, the operating frequency F of the compressor is provided with an upper limit value and a lower limit value, so as to ensure the operation efficiency of the air conditioner and the service life of the compressor of the air conditioner. When the calculated operating frequency F is greater than a specified upper limit value, the operating frequency F of the compressor is set to the upper limit value; and when the calculated operating frequency F is less than a specified lower limit value, the operating frequency F of the compressor is set to the lower limit value.

In any of the foregoing embodiments, determining the rotational speed R of the indoor fan according to the operating frequency F of the compressor includes: the higher the operating frequency F of the compressor, the higher the rotational speed R of the indoor fan.

The manner of determining the rotational speed R of the indoor fan according to the operating frequency F of the compressor is as described in the foregoing embodiments.

In the foregoing embodiments, when the operation mode of the air conditioner is switched to the PMV mode, in the cooling mode, the indoor temperature T set by the user is 29°C or 30°C, and the operating frequency of the compressor and/or the rotational speed of the indoor fan is controlled only according to the first control strategy, so as to control the indoor temperature.

In some embodiments, when the operation mode of the air conditioner is switched to the PMV mode, in the cooling mode, when the operating frequency of the compressor and/or the rotational speed of the indoor fan and the position of the air deflector are controlled according to the fourth control strategy, the rotational speed of the indoor fan is determined by a system according to the operating frequency of the compressor; and if the user changes the rotational speed of the indoor fan during the operation of the air conditioner, the air conditioner exits to control the operating frequency of the compressor and/or the rotational speed of the indoor fan and the position of the air deflector conditioner according to the fourth control strategy. When the rotational speed of the indoor fan of the air conditioner does not meet user needs, the user changes the rotational speed of the indoor fan according to different needs, and the air conditioner exits to control the operating frequency of the compressor and/or the rotational speed of the indoor fan and the position of the air deflector conditioner according to the fourth control strategy, so as to meet the user needs.

In some embodiments, when it is detected that the indoor temperature t and the indoor humidity change and the control strategy needs to be adjusted, the current operating frequency of the compressor and the current rotational speed of the indoor fan are kept for a first specified time, and then the control strategy is switched.

Optionally, the first specified time has a range of 30S to 90S. Preferably, the first specified time is 30S, 60S, or 90S.

The following are device embodiments of the present disclosure, and the device embodiments may be configured to execute the method embodiments of the present disclosure.

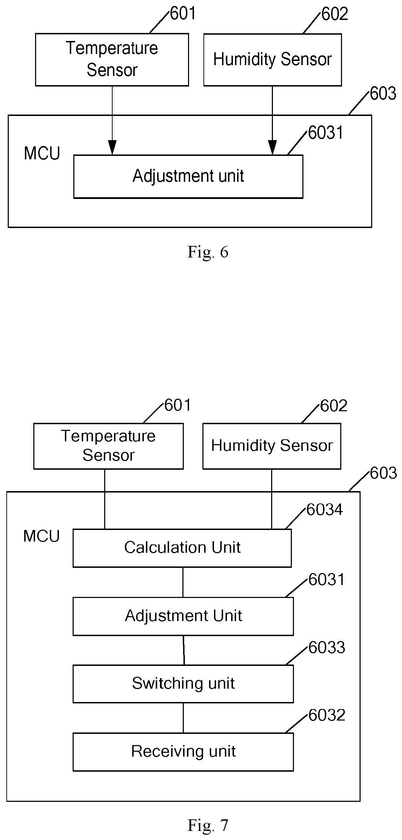

Fig. 6 is a structural block diagram illustrating a device for controlling an air conditioner according to an exemplary embodiment. As shown in Fig. 6, the device includes: a temperature sensor 601, a humidity sensor 602, and a microcontroller unit MCU 603, wherein the MCU 603 includes an adjustment unit 6031.

The temperature sensor 601 is configured to collect an indoor temperature t.

The humidity sensor 602 is configured to collect an indoor humidity RH.

In this embodiment, a sensing end of the temperature sensor can be provided on an air inlet or an outer wall of a casing of the air conditioner, and a sensing end of the humidity sensor can be provided on the air inlet or the outer wall of the casing of the air conditioner.

The adjustment unit 6031 is configured to, when the air conditioner is in a cooling mode, when the indoor temperature t is greater than a first preset temperature t1, control an operating frequency of a compressor and/or a rotational speed of an indoor fan according to a first control strategy; and when the indoor temperature t is less than or equal to the first preset temperature t1, select a corresponding control strategy according to the indoor humidity RH to control the operating frequency of the compressor and/or the rotational speed of the indoor fan; or, control the operating frequency of the compressor and a position of an air deflector according to a second control strategy.

In this embodiment, in the cooling mode, the indoor temperature and the indoor humidity are collected in real time; different control strategies are determined according to the relationship between the indoor temperature and the preset temperature and the indoor humidity, to take into account the adjustment of the indoor temperature and the indoor humidity; and thus one or more of the operating frequency of the compressor, the rotational speed of the indoor fan and the position of the air deflector are adjusted, so that both the indoor temperature and the humidity can meet the requirements of user comfort, thereby avoiding the influence of fluctuations in other environmental parameters caused by adjusting a single indoor environmental parameter.

In the foregoing embodiment, the first preset temperature t1 is associated with a target temperature T, wherein the target temperature T is set by a user. The user can set target temperature T through a remote controller of the air conditioner, a control panel on an indoor unit of the air conditioner, or a mobile terminal with a remote control function for the air conditioner.

In one embodiment, the adjustment unit 6031 is configured to, when the air conditioner is in the cooling mode, when the indoor temperature t is greater than the first preset temperature t1, control the operating frequency of the compressor and/or the rotational speed of the indoor fan according to the first control strategy; and when the indoor temperature t is less than or equal to the first preset temperature t1, select the corresponding control strategy according to the indoor humidity to control the operating frequency of the compressor and/or the rotational speed of the indoor fan.

In this embodiment, in the cooling mode, the indoor temperature and the indoor humidity are collected in real time; different control strategies are determined according to the relationship between the indoor temperature and the preset temperature and the indoor humidity, to take into account the adjustment of the indoor temperature and the indoor humidity; and thus the operating frequency of the compressor and the rotational speed of the indoor fan are adjusted, so that both the indoor temperature and the humidity can meet the requirements of user comfort, thereby avoiding the influence of fluctuations in other environmental parameters caused by adjusting a single indoor environmental parameter.

In the foregoing embodiment, the first preset temperature t1 is associated with the target temperature T, wherein the target temperature T is set by the user. The user can set target temperature T through the remote controller of the air conditioner, the control panel on the indoor unit of the air conditioner, or the mobile terminal with the remote control function for the air conditioner.

In some embodiments, when the indoor temperature T set by the user is greater than K, the first preset temperature t1=K+N; and when the indoor temperature T set by the user is less than or equal to K, the first preset temperature t1=K+M, where K, N, and M are preset temperatures, and N is greater than or equal to M.

Preferably, K=24°C, 25°C, or 26°C. Preferably, N= 2.5°C, 3°C, or 3.5°C. Preferably, M=1.5°C, 2°C, or 2.5°C.

For example, when K=25°C, N=2.5°C, and M=1.5°C, if the indoor temperature T set by the user is 26°C, the first preset temperature t1=26°C+2.5°C=28.5°C; and if the indoor temperature T is 25°C, t1=25°C+1.5°C=26.5°C.

In some embodiments, the adjustment unit 6031 is configured to, when the indoor temperature t is less than or equal to the first preset temperature t1, if the indoor humidity RH is less than a first preset humidity Rh, that is, RH<Rh, control the operating frequency of the compressor and/or the rotational speed of the indoor fan according to a third control strategy; and if the indoor humidity RH is greater than or equal to the first preset humidity Rh, that is, RH≥Rh, control the operating frequency of the compressor and/or the rotational speed of the indoor fan according to a fourth control strategy.

In some embodiments, the adjustment unit 6031 is configured to, when the indoor temperature t is less than or equal to the first preset temperature t1 and the indoor humidity RH is less than a first preset humidity Rh, keep the operating frequency of the compressor unchanged.

In some embodiments, the adjustment unit 6031 is configured to, when the indoor temperature t is less than or equal to the first preset temperature t1 and the indoor humidity RH is less than a first preset humidity Rh, keep the rotational speed of the indoor fan unchanged.

In some embodiments, the adjustment unit 6031 is configured to, when the indoor temperature t is less than or equal to the first preset temperature t1 and the indoor humidity RH is less than a first preset humidity Rh, keep the operating frequency of the compressor and the rotational speed of the indoor fan unchanged.

In some embodiments, the adjustment unit 6031 is configured to, when the indoor temperature t is less than or equal to the first preset temperature t1 and the indoor humidity RH is less than the first preset humidity Rh, control the operating frequency of the compressor and/or the rotational speed of the indoor fan by using the dual temperature difference PID method, so as to ensure comfortable indoor air outlet and improve indoor relative humidity at the same time. In this embodiment, the MCU further includes: a determination unit (not shown in Fig. 6) configured to determine a temperature deviation between a temperature difference between a current temperature and a specified temperature and a first temperature difference determined last time, determine the operating frequency F of the compressor according to the temperature deviation, and determine the rotational speed R of the indoor fan according to the operating frequency F of the compressor.

In some embodiments, the adjustment unit 6031 is further configured to adjust the position of the air deflector according to the operating frequency of the compressor or the rotational speed of the indoor fan.

The adjustment unit 6031 is configured to adjust the operating frequency of the compressor accordingly according to the operating frequency F of the compressor determined by the determination unit; adjust the rotational speed of the indoor fan accordingly according to the rotational speed R of the indoor fan determined by the determination unit; and adjust the air deflector according to the position of the air deflector determined by the determination unit.

In some embodiments, specifically, the determination unit is configured to calculate the operating frequency F of the compressor according to the formula (1).

In any of the foregoing embodiments, the rotational speed R of the indoor fan is determined according to the operating frequency F of the compressor, wherein the higher the operating frequency F of the compressor, the higher the rotational speed R of the indoor fan.

In some embodiments, the rotational speed R of the indoor fan is determined according to Table 1. In other embodiments, the rotational speed R of the indoor fan is calculated according to the formula (2).

In one embodiment, the adjustment unit 6031 is configured to, when the indoor temperature t is greater than a first preset temperature t1, control an operating frequency of a compressor and/or a rotational speed of an indoor fan according to a first control strategy; when the indoor temperature t is less than or equal to the first preset temperature t1 and greater than a second preset temperature t2, control the operating frequency of the compressor and a position of an air deflector according to a second control strategy; and when the indoor temperature t is less than or equal to the second preset temperature t2, select the corresponding control strategy according to the indoor humidity RH to control the operating frequency of the compressor and/or the rotational speed of the indoor fan, and adjust the position of the air deflector according to the operating frequency of the compressor or the rotational speed of the indoor fan.

In this embodiment, in the cooling mode, the indoor temperature and the indoor humidity are collected in real time; different control strategies are determined according to the relationship between the indoor temperature and the preset temperature and the indoor humidity, to take into account the adjustment of the indoor temperature and the indoor humidity; and thus the operating frequency of the compressor, the rotational speed of the indoor fan and the position of the air deflector are adjusted, so that both the indoor temperature and the humidity can meet the requirements of user comfort, thereby avoiding the influence of fluctuations in other environmental parameters caused by adjusting a single indoor environmental parameter.

In the foregoing embodiments, the first preset temperature t1 and the second preset temperature t2 are associated with a target temperature T, wherein the target temperature T is set by a user. The user can set target temperature T through a remote controller of the air conditioner, a control panel on an indoor unit of the air conditioner, or a mobile terminal with a remote control function for the air conditioner.

In some embodiments, when the indoor temperature T set by the user is greater than K, the first preset temperature t1=K+N, and the second preset temperature t2=K+N-Q; and when the indoor temperature T set by the user is less than or equal to K, the first preset temperature t1=K+M, and the second preset temperature t2=K+M-Q, where K, N, M, and Q are preset temperatures, the first preset temperature t1 is greater than the second preset temperature t2, N is greater than or equal to M, and N and M are greater than Q.

Preferably, K=24°C, 25°C, or 26°C. Preferably, N= 2.5°C, 3°C, or 3.5°C. Preferably, M=1.5°C, 2°C, or 2.5°C. Preferably, Q=1°C, 2°C, or 3°C.

For example, when K=25°C, N=2.5°C, M=1.5°C, and Q=1°C, if the indoor temperature T set by the user is 26°C, the first preset temperature t1=26°C+2.5°C=28.5°C, and the second preset temperature t2=26°C+2.5°C-1°C=27.5°C; and if the indoor temperature T is 25°C, t1=25°C+1.5°C=26.5°C, and t2=25°C+1.5°C-1°C =25.5°C.

In any of the foregoing embodiments, the adjustment unit 6031 is further configured to, when the indoor temperature t is less than or equal to the second preset temperature t2, if the indoor humidity RH is less than a first preset humidity Rh, control the operating frequency of the compressor and/or the rotational speed of the indoor fan according to a third control strategy; and if the indoor humidity RH is greater than or equal to the first preset humidity Rh, control the operating frequency of the compressor and/or the rotational speed of the indoor fan according to a fourth control strategy.

Preferably, the first preset humidity Rh is 52%.

In some embodiments, the adjustment unit 6031 is configured to, when the indoor temperature t is less than or equal to the first preset temperature t1 and greater than the second preset temperature t2, adjust the operating frequency F of the compressor to a specified frequency f1, and adjust the air deflector to a maximum air outlet position.

The specified frequency f1 can be a fixed value, which can be set according to the results of many tests, so as to ensure the energy saving effect of the air conditioner. Preferably, the specified frequency f1 is 70% of the highest frequency of the compressor.

In some embodiments, the adjustment unit 6031 is further configured to, when the indoor humidity RH is less than the first preset humidity Rh, keep the operating frequency of the compressor and/or the rotational speed of the indoor fan unchanged; or, control the operating frequency of the compressor and/or the rotational speed of the indoor fan by using the dual temperature difference PID method.

In some embodiments, the adjustment unit 6031 is configured to, when the indoor temperature t is less than or equal to the first preset temperature t1 and the indoor humidity RH is less than a first preset humidity Rh, keep the operating frequency of the compressor unchanged.

In some embodiments, the adjustment unit 6031 is configured to, when the indoor temperature t is less than or equal to the first preset temperature t1 and the indoor humidity RH is less than a first preset humidity Rh, keep the rotational speed of the indoor fan unchanged.

In some embodiments, the adjustment unit 6031 is configured to, when the indoor temperature t is less than or equal to the first preset temperature t1 and the indoor humidity RH is less than a first preset humidity Rh, keep the operating frequency of the compressor and the rotational speed of the indoor fan unchanged.

In some embodiments, the adjustment unit 6031 is configured to, when the indoor temperature t is less than or equal to the first preset temperature t1 and the indoor humidity RH is less than the first preset humidity Rh, control the operating frequency of the compressor and/or the rotational speed of the indoor fan by using the dual temperature difference PID method, so as to ensure comfortable indoor air outlet and improve indoor relative humidity at the same time.

In this embodiment, the MCU further includes: a determination unit (not shown in Fig. 6) configured to determine a temperature deviation between a temperature difference between a current temperature and a specified temperature and a first temperature difference determined last time, determine the operating frequency F of the compressor according to the temperature deviation, and determine the rotational speed R of the indoor fan according to the operating frequency F of the compressor.

The adjustment unit 6031 is configured to adjust the operating frequency of the compressor accordingly according to the operating frequency F of the compressor determined by the determination unit; and adjust the rotational speed of the indoor fan accordingly according to the rotational speed R of the indoor fan determined by the determination unit.

In the foregoing embodiments, determination unit is further configured to determine the position of the air deflector according to the rotational speed R of the indoor fan.

The adjustment unit 6031 is configured to adjust the operating frequency of the compressor accordingly according to the operating frequency F of the compressor determined by the determination unit; adjust the rotational speed of the indoor fan accordingly according to the rotational speed R of the indoor fan determined by the determination unit; and adjust the air deflector according to the position of the air deflector determined by the determination unit.

In some embodiments, specifically, the determination unit is configured to calculate the operating frequency F of the compressor according to the formula (1).

In any of the foregoing embodiments, the rotational speed R of the indoor fan is determined according to the operating frequency F of the compressor, wherein the higher the operating frequency F of the compressor, the higher the rotational speed R of the indoor fan.

In some embodiments, the rotational speed R of the indoor fan is determined according to Table 1. In other embodiments, the rotational speed R of the indoor fan is calculated according to the formula (2).

In some embodiments, as shown in Fig. 7, the device for controlling an air conditioner further includes a calculation unit 6034.

The calculation unit 6034 is configured to, when the indoor temperature t is less than or equal to the first preset temperature t1 and when the indoor humidity RH is greater than or equal to the first preset humidity Rh, calculate a correction value of the target temperature T to obtain a corrected temperature Tx, determine the operating frequency F of the compressor according to the corrected target temperature Tx, and determine the rotational speed R of the indoor fan according to the operating frequency F of the compressor, wherein the target temperature T is set by the user.

The adjustment unit 6031 is further configured to adjust the operating frequency of the compressor accordingly according to the operating frequency F of the compressor determined by the calculation unit 6034; and adjust the rotational speed of the indoor fan accordingly according to the rotational speed R of the indoor fan determined by the calculation unit 6034.

In some embodiments, the calculation unit 6034 is configured to obtain the corrected temperature Tx according to Tx=T-Dset when the correction is performed for the first time, and obtain the corrected temperature Tx according to Tx=Tx1-Dset when the correction is performed for the second and subsequent times.

Tx is a temperature after this correction, Tx1 is a temperature after the previous correction, and Dset is a correction value. Optionally, Dset is a fixed value, or, Dset is a variable.

In some embodiments, the calculation unit 6034 is configured to, when the correction is performed each time, calculate the correction value Dset according to a humidity difference Prh between the indoor humidity RH and a target humidity RHm and a change Drh of the indoor humidity. Specifically, Dset is calculated according to the formula (3).

In some embodiments, the calculation unit 6034 is configured to calculate the operating frequency F of the compressor according to a temperature difference PT between the indoor temperature t and the corrected target temperature Tx and a change DT of the indoor temperature. Specifically, F is calculated according to the formula (4).

In any of the foregoing embodiments, the calculation unit 6034 is configured to determine the rotational speed R of the indoor fan according to the operating frequency F of the compressor, wherein the higher the operating frequency F of the compressor, the higher the rotational speed R of the indoor fan.

In some embodiments, the rotational speed R of the indoor fan is determined according to Table 1. In other embodiments, the rotational speed R of the indoor fan is calculated according to the formula (2).

In some embodiments, when the indoor temperature t is less than or equal to the second preset temperature t2 and the indoor humidity RH is greater than or equal to the first preset humidity Rh, the adjustment unit 6031 controls the operating frequency of the compressor and/or the rotational speed of the indoor fan according to the fourth control strategy; when the indoor temperature t is greater than a third preset temperature t3, that is, t3<t≤t2, if the rotational speed R of the indoor fan is less than or equal to the specified rotational speed R', the adjustment unit 6031 adjusts the air deflector to a minimum air outlet position; and if the rotational speed R of the indoor fan is greater than the specified rotational speed R', the adjustment unit 6031 adjusts the air deflector to the maximum air outlet position; and when the indoor temperature t is less than or equal to the third preset temperature t3, that is, t≤t3, the adjustment unit 6031 adjusts the indoor fan to run at a maximum rotational speed, and adjusts the air deflector to the minimum air outlet position, at this time, the indoor temperature is too low, a temperature of an upper-level air is high, and a temperature of a lower-level air contacted by a human body is low, the indoor fan is adjusted to run at the maximum rotational speed, and the air deflector is adjusted to the minimum air outlet position, thereby accelerating a mixing speed of the upper-level air and the lower-level air, and making the temperature of the air contacted by the user suitable.

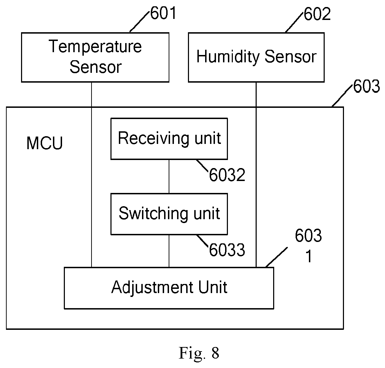

In any of the foregoing embodiments, as shown in Fig. 7 and Fig. 8, the device for controlling an air conditioner further includes: a receiving unit 6032 and a switching unit 6033.

The receiving unit 6032 is configured to receive a mode switching instruction.

The switching unit 6033 is configured to switch from a current operating mode to a first mode according to the mode switching instruction received by the receiving unit 6032.

The first mode is a PMV mode.

In some embodiments, when the operation mode of the air conditioner is switched to the PMV mode, in the cooling mode, when the operating frequency of the compressor and/or the rotational speed of the indoor fan and the position of the air deflector are controlled according to the fourth control strategy, the rotational speed of the indoor fan is determined by a system according to the operating frequency of the compressor; and if the user changes the rotational speed of the indoor fan during the operation of the air conditioner, the air conditioner exits to control the operating frequency of the compressor and/or the rotational speed of the indoor fan and the position of the air deflector conditioner according to the fourth control strategy. When the rotational speed of the indoor fan of the air conditioner does not meet user needs, the user changes the rotational speed of the indoor fan according to different needs, and the air conditioner exits to control the operating frequency of the compressor and/or the rotational speed of the indoor fan and the position of the air deflector conditioner according to the fourth control strategy, so as to meet the user needs.

In some embodiments, when it is detected that the indoor temperature t and the indoor humidity change and the control strategy needs to be adjusted, the current operating frequency of the compressor and the current rotational speed of the indoor fan are kept for a first specified time, and then the control strategy is switched.

Optionally, the first specified time has a range of 30S to 90S. Preferably, the first specified time is 30S, 60S, or 90S.

The present disclosure also includes an air conditioner including a compressor and an indoor fan, and further including the device described in any of the foregoing embodiments.

**Claims**

1. A method for controlling an air conditioner, comprising:

   when the air conditioner is in a cooling mode, collecting (S101, S201, S301, S401) an indoor temperature t and an indoor humidity RH;
   when the indoor temperature t is greater than a first preset temperature t1, controlling (S102, S202, S302, S402) an operating frequency of a compressor and/or a rotational speed of an indoor fan according to a first control strategy; and
   when the indoor temperature t is less than or equal to the first preset temperature t1, selecting (S103) a corresponding control strategy according to the indoor humidity RH to control the operating frequency of the compressor and/or the rotational speed of the indoor fan; or, controlling the operating frequency of the compressor and a position of an air deflector according to a second control strategy,
   **characterized in that**
   wherein the controlling the operating frequency of the compressor and the position of the air deflector according to the second control strategy comprises:

adjusting the operating frequency F of the compressor to a specified frequency f1, and adjusting the air deflector to a maximum air outlet position,
wherein the selecting (S103) the corresponding control strategy according to the indoor humidity RH to control the operating frequency of the compressor and/or the rotational speed of the indoor fan comprises:

when the indoor humidity RH is less than a first preset humidity Rh, controlling (S404) the operating frequency of the compressor and/or the rotational speed of the indoor fan according to a third control strategy; and
when the indoor humidity RH is greater than or equal to the first preset humidity Rh, controlling (S405) the operating frequency of the compressor and/or the rotational speed of the indoor fan according to a fourth control strategy,
wherein the controlling (S405) the operating frequency of the compressor and/or the rotational speed of the indoor fan according to the fourth control strategy comprises:

performing one or more corrections on the target temperature T to obtain a corrected target temperature Tx, wherein the target temperature T is set by a user;
determining the operating frequency F of the compressor according to the corrected target temperature Tx, and adjusting the operating frequency F of the compressor accordingly; and
determining the rotational speed R of the indoor fan according to the operating frequency F of the compressor, and adjusting the rotational speed R of the indoor fan accordingly,
wherein the performing one or more corrections on the target temperature T comprises:

when the correction is performed for the first time, $Tx=T-Dset$; and
when the correction is performed for the second and subsequent times, $Tx=Tx1-Dset$,
where Tx is a temperature after this correction, Tx1 is a temperature after the previous correction, and Dset is a correction value.

2. The method according to claim 1, wherein when the indoor temperature t is less than or equal to the first preset temperature t1 and greater than a second preset temperature t2, controlling (S303, S403) the operating frequency of the compressor and the position of the air deflector according to the second control strategy, wherein the first preset temperature t1 is greater than the second preset temperature t2.

3. The method according to claim 1, wherein when the indoor temperature t is less than or equal to a second preset temperature t2, selecting the corresponding control strategy according to the indoor humidity RH to control the operating frequency of the compressor and/or the rotational speed of the indoor fan, wherein the first preset temperature t1 is greater than the second preset temperature t2.

4. The method according to claim 1, wherein the controlling (S404) the operating frequency of the compressor and/or the rotational speed of the indoor fan according to the third control strategy comprises:

keeping the operating frequency of the compressor and/or the rotational speed of the indoor fan unchanged; or,
controlling the operating frequency of the compressor and/or the rotational speed of the indoor fan by using a dual temperature difference PID method.

5. The method according to claim 4, wherein the controlling the operating frequency of the compressor and/or the rotational speed of the indoor fan by using the dual temperature difference PID method comprises:

determining a temperature deviation between a temperature difference and a first temperature difference determined last time, wherein the temperature difference is a difference between a current temperature and a specified temperature;
determining the operating frequency F of the compressor according to the temperature deviation, and adjusting the operating frequency F of the compressor accordingly; and
determining the rotational speed R of the indoor fan according to the operating frequency F of the compressor, and adjusting the rotational speed R of the indoor fan accordingly.

6. The method according to claim 5, wherein the determining the operating frequency F of the compressor according to the temperature deviation comprises:

calculating the operating frequency F of the compressor according to the following formula:

$$F=(t1\_Ki \times Dt_n + t1\_Kp \times Pt_n) \times C;$$

where $Dt_n = |Pt_n - Pt_{n-1}|$, $Pt_n = |Tn - Tm|$, t1_Ki is a temperature deviation coefficient, t1_Kp is a temperature difference coefficient, C is an operating frequency coefficient, $Dt_n$ is the temperature deviation, $Pt_n$ is the temperature difference, Tn is the current temperature, and Tm is the specified temperature.

7. The method according to claim 6, wherein when the calculated operating frequency F is greater than a specified upper limit value, setting the operating frequency F of the compressor to the upper limit value; and when the calculated operating frequency F is less than a specified lower limit value, setting the operating frequency F of the compressor to the lower limit value.

8. The method according to claim 1, wherein when the correction is performed each time, calculating the correction value Dset according to a humidity difference Prh between the indoor humidity RH and a target humidity RHm and a change Drh of the indoor humidity, where $Dset=Int\{[RH\_Ki \times Prh + RH\_Kp \times Drh] \times 100\}/100$, Prh=RH-RHm, Drh=RH-RH1, RH1 is an indoor humidity collected last time, and RH_Kp and RH_Ki are specified weighting coefficients respectively; wherein, a selection of RH_Kp is related to a system configuration and an external environment temperature, and a selection of RH_Ki is related to the system configuration and the external environment temperature.

9. A device for controlling an air conditioner, comprising a temperature sensor (601) for collecting an indoor temperature t, a humidity sensor (602) for collecting an indoor humidity RH, and a microcontroller unit MCU (603), wherein the MCU (603) comprises:

an adjustment unit (6031) configured to, when the air conditioner is in a cooling mode, when the indoor temperature t is greater than a first preset temperature t1, control an operating frequency of a compressor and/or a rotational speed of an indoor fan according to a first control strategy; and when the indoor temperature t is less than or equal to the first preset temperature t1, select a corresponding control strategy according to the indoor humidity RH to control the operating frequency of the compressor and/or the rotational speed of the indoor fan, or, control the operating frequency of the compressor and a position of an air deflector according to a second control strategy;
**characterized in that**
wherein the adjustment unit (6031) configured to control the operating frequency of the compressor and the position of the air deflector according to the second control strategy, further comprises:

adjusting the operating frequency F of the compressor to a specified frequency f1, and adjusting the air deflector to a maximum air outlet position,
wherein the adjustment unit (6031) configured to select the corresponding control strategy according to the indoor humidity RH to control the operating frequency of the compressor and/or the rotational speed of the indoor fan, further comprises:

when the indoor humidity RH is less than a first preset humidity Rh, controlling the operating frequency of the compressor and/or the rotational speed of the indoor fan according to a third control strategy; and when the indoor humidity RH is greater than or equal to the first preset humidity Rh, controlling the operating frequency of the compressor and/or the rotational speed of the indoor fan according to a fourth control strategy,
wherein the controlling the operating frequency of the compressor and/or the rotational speed of the indoor fan according to the fourth control strategy comprises:

performing one or more corrections on the target temperature T to obtain a corrected target temperature Tx, wherein the target temperature T is set by a user;
determining the operating frequency F of the compressor according to the corrected target temperature Tx, and adjusting the operating frequency F of the compressor accordingly; and determining the rotational speed R of the indoor fan according to the operating frequency F of the compressor, and adjusting the rotational speed R of the indoor fan accordingly,

wherein the performing one or more corrections on the target temperature T comprises:

when the correction is performed for the first time, Tx=T-Dset; and
when the correction is performed for the second and subsequent times, Tx=Tx1-Dset,
where Tx is a temperature after this correction, Tx1 is a temperature after the previous correction, and Dset is a correction value.

10. An air conditioner, comprising a compressor and an indoor fan, and further comprising a device for controlling the air conditioner according to claim 9.


**Patentansprüche**

1. Verfahren zum Steuern einer Klimaanlage mit den Schritten:

wenn sich die Klimaanlage in einem Kühlmodus befindet, Erfassen (5101, S201, S301) S401) einer Innentemperatur t und einer Innenfeuchtigkeit RH;
wenn die Innentemperatur t höher als eine erste voreingestellte Temperatur t1 ist, Steuern (S102, S202, S302, S402) einer Betriebsfrequenz eines Kompressors und/oder einer Drehzahl einen Innengebläses gemäß einer ersten Steuerstrategie; und
wenn die Innentemperatur t geringer oder gleich der ersten voreingestellten Temperatur t1 ist, Wählen (S103) einer entsprechenden Steuerstrategie gemäß der Innenfeuchtigkeit RH, um die Betriebsfrequenz des Kompressors und/oder die Drehzahl des Innengebläses zu steuern; oder Steuern der Betriebsfrequenz des Kompressors und einer Position eines Luftleitblechs gemäß einer zweiten Steuerstrategie,
**dadurch gekennzeichnet, dass**
das Steuern der Betriebsfrequenz des Kompressors und der Position eines Luftleitblechs gemäß der zweiten Steuerstrategie den folgenden Schritt aufweist:

Einstellen der Betriebsfrequenz F des Kompressors auf eine spezifizierte Frequenz f1, und Einstellen des Luftleitblechs auf eine maximale Luftauslassposition,
wobei das Wählen (S103) der entsprechenden Kontrollstrategie gemäß der Innenfeuchtigkeit RH zum Steuern der Betriebsfrequenz des Kompressors und/oder der Drehzahl des Innengebläses die folgenden Schritte aufweist:

wenn die Innenfeuchtigkeit RH geringer als eine erste voreingestellte Feuchtigkeit Rh ist, Steuern (S404) der Betriebsfrequenz des Kompressor und/oder der Drehzahl des Innengebläses gemäß einer dritten Steuerstrategie; und
wenn die Innenfeuchtigkeit RH größer als oder gleich der ersten voreingestellten Feuchtigkeit Rh ist, Steuern (S405) der Betriebsfrequenz des Kompressors und/oder der Drehzahl des Innengebläses gemäß einer vierten Steuerstrategie,
wobei das Steuern (S405) der Betriebsfrequenz des Kompressors und/oder der Drehzahl des Innengebläses gemäß der vierten Steuerstrategie die folgenden Schritte aufweist:

Durchführen einer oder mehrerer Korrekturen an der Ziel-Temperatur T, um eine korrigierte Ziel-Temperatur Tx zu erhalten, wobei die Ziel-Temperatur T von einem Benutzer eingestellt wird;
Bestimmen der Betriebsfrequenz F des Kompressors gemäß der korrigierten Ziel-Temperatur Tx, und entsprechendes Einstellen der Betriebsfrequenz F des Kompressors; und
Bestimmen der Drehzahl R des Innengebläses gemäß der Betriebsfrequenz F des Kompressors, und entsprechendes Einstellen der Drehzahl R des Innengebläses,
wobei das Durchführen einer oder mehrerer Korrekturen an der Ziel-Temperatur T aufweist:

wenn die Korrektur erstmalig durchgeführt wird, Tx=T-Dset; und
wenn die Korrektur zum zweiten Mal und nachfolgende Male durchgeführt wird, Tx=Tx1-Dset, wobei Tx eine Temperatur nach dieser Korrektur ist, Tx1 eine Temperatur nach der vorhergehenden Korrektur ist, und Dset ein Korrekturwert ist.

2. Verfahren nach Anspruch 1, bei welchem, wenn die Innentemperatur t geringer oder gleich der ersten voreingestellten Temperatur t1 ist und höher als eine zweite voreingestellte Temperatur t1 ist, die Betriebsfrequenz des Kompressors und die Position des Luftleitblechs gemäß der zweiten Steuerstrategie gesteuert werden (S303, S403), wobei die erste voreingestellte Temperatur t1 größer als die zweite voreingestellte Temperatur t2 ist.

3. Verfahren nach Anspruch 1, bei welchem, wenn die Innentemperatur t geringer oder gleich einer zweiten voreingestellten Temperatur t2 ist, die entsprechende Steuerstrategie gemäß der Innenfeuchtigkeit RH gewählt wird, um die Betriebsfrequenz des Kompressors und/oder die Drehzahl des Innengebläses zu steuern, wobei die erste voreingestellte Temperatut t1 höher als die zweite voreingestellte Temperatur t2 ist.

4. Verfahren nach Anspruch 1, bei welchem das Steuern (S404) der Betriebsfrequenz des Kompressors und/oder der Drehzahl des Innengebläses gemäß der dritten Steuerstrategie die folgenden Schritte aufweist:

Belassen der Betriebsfrequenz des Kompressors und/oder der Drehzahl des Innengebläses im unveränderten Zustand; oder
Steuern der Betriebsfrequenz des Kompressors und/oder der Drehzahl des Innengebläses mittels eines Doppel-Temperaturdifferenz-PID-Verfahrens.

5. Verfahren nach Anspruch 4, bei welchem das Steuern der Betriebsfrequenz des Kompressors und/oder der Drehzahl des Innengebläses mittels des Doppel-Temperaturdifferenz-PID-Verfahrens die folgenden Schritte aufweist:

Bestimmen einer Temperaturabweichung zwischen einer Temperaturdifferenz und einer zuletzt bestimmten ersten Temperaturdifferenz, wobei die Temperaturdifferenz eine Differenz zwischen einer aktuellen Temperatur und einer spezifizierten Temperatur ist;
Bestimmen der Betriebsfrequenz F des Kompressors gemäß der Temperaturabweichung, und entsprechendes Einstellen der Betriebsfrequenz F des Kompressors; und
Bestimmen der Drehzahl R des Innengebläses gemäß der Betriebsfrequenz F des Kompressors, und entsprechendes Einstellen der Drehzahl R des Innengebläses.

6. Verfahren nach Anspruch 5, bei welchem das Bestimmen der Betriebsfrequenz F des Kompressors gemäß der Temperaturabweichung den folgenden Schritt aufweist:

Berechnen der Betriebsfrequenz F des Kompressors gemäß der folgenden Formel:

$$F=(t1\_Ki \times Dt_n+t1\_Kp \times Pt_n) \times C;$$

wobei $Dt_n=|Pt_n-Pt_{n-1}|$, $Pt_n=|Tn-Tm|$, t1_Ki ein Temperaturabweichungskoeffizient ist, t1_Kp ein Temperaturdifferenzkoeffizient ist, C ein Betriebsfrequenzkoeffizient ist, $Dt_n$ die Temperaturabweichung bezeichnet, $Pt_n$ die Temperaturdifferenz bezeichnet, Tn die aktuelle Temperatur bezeichnet, und Tm die spezifizierte Temperatur bezeichnet.

7. Verfahren nach Anspruch 6, bei welchem, wenn die berechnete Betriebsfrequenz F höher als ein spezifizierter oberer Grenzwert ist, Einstellen der Betriebsfrequenz F auf den oberen Grenzwert; und wenn die berechnete Betriebsfrequenz F geringer als ein spezifizierter unterer Grenzwert ist, Einstellen der Betriebsfrequenz F des Kompressors auf den unteren Grenzwert.

8. Verfahren nach Anspruch 1, bei welchem, wenn die Korrektur jedes Mal durchgeführt wird, der Korrekturwert Dset gemäß einer Feuchtigkeitsdifferenz Prh zwischen der Innenfeuchtigkeit RH und einer Ziel-Feuchtigkeit RHm und einer Änderung Drh der Innenfeuchtigkeit berechnet wird, wobei $Dset=Int\{[RH\_Ki \times Prh+RH\_K\rho \times Drh] \times 100\}/100$, $Prh=RH-RHm$, $Drh=RH-RH1$, RH1 eine zuletzt erfasste Innenfeuchtigkeit ist, und RH_Kp und RH_Ki jeweils spezifizierte Gewichtungskoeffizienten sind, wobei eine Auswahl von RH_Kp in Bezug zu einer Systemkonfiguration und einer Außenumgebungstemperatur steht, und eine Auswahl von RH_Ki in Bezug zu der Systemkonfiguration und der Außenumgebungstemperatur steht.

9. Vorrichtung zum Steuern einer Klimaanlage mit einem Temperatursensor (601) zum Erfassen einer Innentemperatur t, einem Feuchtigkeitssensor (602) zum Erfassen einer Innenfeuchtigkeit RH, und einer Mikrocontrollereinheit MCU (603), wobei die MCU (603) aufweist:

eine Einstelleinheit (6031), die dazu ausgebildet ist, wenn sich die Klimaanlage in einem Kühlmodus befindet, falls die Innentemperatur t höher als eine erste voreingestellte Temperatur t1 ist, eine Betriebsfrequenz eines Kompressors und/oder eine Drehzahl einen Innengebläses gemäß einer ersten Steuerstrategie zu steuern; und wenn die Innentemperatur t geringer oder gleich der ersten voreingestellten Temperatur t1 ist, eine entsprechende Steuerstrategie gemäß der Innenfeuchtigkeit RH zu wählen, um die Betriebsfrequenz des Kompressors und/oder die Drehzahl des Innengebläses zu steuern; oder die Betriebsfrequenz des Kompressors und eine Position eines Luftleitblechs gemäß einer zweiten Steuerstrategie zu steuern,

**dadurch gekennzeichnet, dass**

die Einstelleinheit (6031), die dazu ausgebildet ist, die Betriebsfrequenz des Kompressors und die Position des Luftleitblechs gemäß der zweiten Steuerstrategie zu steuern, ferner dazu ausgebildet ist,

die Betriebsfrequenz F des Kompressors auf eine spezifizierte Frequenz f1 einzustellen, und das Luftleitblech auf eine maximale Luftauslassposition einzustellen,

wobei die Einstelleinheit (6031), die dazu ausgebildet ist, die entsprechende Kontrollstrategie gemäß der Innenfeuchtigkeit RH zum Steuern der Betriebsfrequenz des Kompressors und/oder der Drehzahl des Innengebläses zu wählen, ferner dazu ausgebildet ist,

wenn die Innenfeuchtigkeit RH geringer als eine erste voreingestellte Feuchtigkeit Rh ist, die Betriebsfrequenz des Kompressors und/oder die Drehzahl des Innengebläses gemäß einer dritten Steuerstrategie zu steuern; und wenn die Innenfeuchtigkeit RH größer als oder gleich der ersten voreingestellten Feuchtigkeit Rh ist, die Betriebsfrequenz des Kompressors und/oder die Drehzahl des Innengebläses gemäß einer vierten Steuerstrategie zu steuern,

wobei das Steuern (S405) der Betriebsfrequenz des Kompressors und/oder der Drehzahl des Innengebläses gemäß der vierten Steuerstrategie die folgenden Schritte aufweist:

Durchführen einer oder mehrerer Korrekturen an der Ziel-Temperatur T, um eine korrigierte Ziel-Temperatur Tx zu erhalten, wobei die Ziel-Temperatur T von einem Benutzer eingestellt wird; Bestimmen der Betriebsfrequenz F des Kompressors gemäß der korrigierten Ziel-Temperatur Tx, und entsprechendes Einstellen der Betriebsfrequenz F des Kompressors; und Bestimmen der Drehzahl R des Innengebläses gemäß der Betriebsfrequenz F des Kompressors, und entsprechendes Einstellen der Drehzahl R des Innengebläses, wobei das Durchführen einer oder mehrerer Korrekturen an der Ziel-Temperatur T aufweist:

wenn die Korrektur erstmalig durchgeführt wird, Tx=T-Dset; und wenn die Korrektur zum zweiten Mal und nachfolgende Male durchgeführt wird, Tx=Tx1-Dset, wobei Tx eine Temperatur nach dieser Korrektur ist, Tx1 eine Temperatur nach der vorhergehenden Korrektur ist, und Dset ein Korrekturwert ist.

**10.** Klimaanlage mit einem Kompressor und einem Innengebläse, und ferner mit einer Vorrichtung zum Steuern der Klimaanlage gemäß Anspruch 9.

**Revendications**

**1.** Procédé de commande d'un conditionneur d'air, comprenant les étapes consistant à :

lorsque le conditionneur d'air est dans un mode de refroidissement, collecter (S101, S201, S301, S401) une température intérieure t et une humidité intérieure RH ; lorsque la température intérieure t est supérieure à une première température prédéfinie t1, commander (S102, S202, S302, S402) une fréquence de fonctionnement d'un compresseur et/ou une vitesse de rotation d'un ventilateur intérieur conformément à une première stratégie de commande ; et lorsque la température intérieure t est inférieure ou égale à la première température prédéfinie t1, sélectionner (S103) une stratégie de commande correspondante conformément à l'humidité intérieure RH pour commander la fréquence de fonctionnement du compresseur et/ou la vitesse de rotation du ventilateur intérieur ; ou, commander la fréquence de fonctionnement du compresseur et une position d'un déflecteur d'air conformément à une deuxième stratégie de commande,

**caractérisé en ce que**

l'étape de commande de la fréquence de fonctionnement du compresseur et de la position du déflecteur d'air conformément à la deuxième stratégie de commande consiste à :

régler la fréquence de fonctionnement F du compresseur à une fréquence spécifiée f1, et régler le déflecteur d'air à une position de sortie d'air maximale,

dans lequel l'étape de sélection (S103) de la stratégie de commande correspondante conformément à l'humidité intérieure RH pour commander la fréquence de fonctionnement du compresseur et/ou la vitesse de rotation du ventilateur intérieur consiste à :

lorsque l'humidité intérieure RH est inférieure à une première humidité prédéfinie Rh, commander (S404) la fréquence de fonctionnement du compresseur et/ou la vitesse de rotation du ventilateur intérieur conformément à une troisième stratégie de commande ; et

lorsque l'humidité intérieure RH est supérieure ou égale à la première humidité prédéfinie Rh, commander (S405) la fréquence de fonctionnement du compresseur et/ou la vitesse de rotation du ventilateur intérieur conformément à une quatrième stratégie de commande,

dans lequel l'étape de commande (S405) de la fréquence de fonctionnement du compresseur et/ou de la vitesse de rotation du ventilateur intérieur conformément à la quatrième stratégie de commande consiste à :

appliquer une ou plusieurs corrections à la température cible T pour obtenir une température cible corrigée Tx, dans lequel la température cible T est définie par un utilisateur ;

déterminer la fréquence de fonctionnement F du compresseur conformément à la température cible corrigée Tx, et régler la fréquence de fonctionnement F du compresseur en conséquence ; et

déterminer la vitesse de rotation R du ventilateur intérieur conformément à la fréquence de fonctionnement F du compresseur, et régler la vitesse de rotation R du ventilateur intérieur en conséquence,

dans lequel l'application d'une ou de plusieurs corrections à la température cible T est telle que :

lorsque la correction est appliquée pour la première fois, Tx = T-Dset ; et

lorsque la correction est appliquée pour la deuxième fois et lors de fois suivantes, Tx = Tx1-Dset,

où Tx est une température après cette correction, Tx1 est une température après la correction précédente, et Dset est une valeur de correction.

**2.** Procédé selon la revendication 1, dans lequel, lorsque la température intérieure t est inférieure ou égale à une première température prédéfinie t1 et supérieure à une seconde température prédéfinie t2, commander (S303, S403) la fréquence de fonctionnement du compresseur et la position du déflecteur d'air conformément à la deuxième stratégie de commande, dans lequel la première température prédéfinie t1 est supérieure à la seconde température prédéfinie t2.

**3.** Procédé selon la revendication 1, dans lequel, lorsque la température intérieure t est inférieure ou égale à une seconde température prédéfinie t2, sélectionner la stratégie de commande correspondante conformément à l'humidité intérieure RH pour commander la fréquence de fonctionnement du compresseur et/ou la vitesse de rotation du ventilateur intérieur, dans lequel la première température prédéfinie t1 est supérieure à la seconde température prédéfinie t2.

**4.** Procédé selon la revendication 1, dans lequel l'étape de commande (S404) de la fréquence de fonctionnement du compresseur et/ou de la vitesse de rotation du ventilateur intérieur conformément à la troisième stratégie de commande consiste à :

maintenir inchangées la fréquence de fonctionnement du compresseur et/ou la vitesse de rotation du ventilateur intérieur ; ou,

commander la fréquence de fonctionnement du compresseur et/ou la vitesse de rotation du ventilateur intérieur en utilisant un procédé PID de différence entre deux températures.

**5.** Procédé selon la revendication 4, dans lequel l'étape de commande de la fréquence de fonctionnement du compresseur et/ou de la vitesse de rotation du ventilateur intérieur en utilisant le procédé PID de différence entre deux températures consiste à :

déterminer un écart de température entre une différence de température et une première différence de température déterminée la dernière fois, dans lequel la différence de température est une différence entre une température courante et une température spécifiée ;

déterminer la fréquence de fonctionnement F du compresseur conformément à l'écart de température, et régler la fréquence de fonctionnement F du compresseur en conséquence ; et

déterminer la vitesse de rotation R du ventilateur intérieur conformément à la fréquence de fonctionnement F du compresseur, et régler la vitesse de rotation R du ventilateur intérieur en conséquence.

6. Procédé selon la revendication 5, dans lequel l'étape de détermination de la fréquence de fonctionnement F du compresseur conformément à l'écart de température consiste à :

calculer la fréquence de fonctionnement F du compresseur conformément à la formule suivante :

$$F = (t1\_Ki \times Dt_n + t1\_Kp \times Pt_n) \times C \ ;$$

dans laquelle $Dt_n = |Pt_n-Pt_{n-1}|$, $Pt_n = |Tn-Tm|$, t1_Ki est un coefficient d'écart de température, t1_Kp est un coefficient de différence de température, C est un coefficient de fréquence de fonctionnement, $Dt_n$ est l'écart de température, $Pt_n$ est la différence de température, Tn est la température courante, et Tm est la température spécifiée.

7. Procédé selon la revendication 6, dans lequel, lorsque la fréquence de fonctionnement calculée F est supérieure à une valeur limite haute spécifiée, régler la fréquence de fonctionnement F du compresseur à la valeur limite haute ; et, lorsque la fréquence de fonctionnement calculée F est inférieure à une valeur limite basse spécifiée, régler la fréquence de fonctionnement F du compresseur à la valeur limite basse.

8. Procédé selon la revendication 1, dans lequel, lorsque la correction est appliquée à chaque fois, calculer la valeur de correction Dset conformément à une différence d'humidité Prh entre l'humidité intérieure RH et une humidité cible RHm et une variation Drh de l'humidité intérieure, où Dset = Int{[RH_Ki x Prh+RH_Kp x Drh]x100}/100, Prh = RH-RHm, Drh = RH-RH1, RH1 est une humidité intérieure collectée la dernière fois, et RH_Kp et RH_Ki sont respectivement des coefficients de pondération spécifiés ; dans lequel une sélection de RH_Kp est associée à une configuration de système et à une température d'environnement externe, et une sélection de RH_Ki est associée à la configuration de système et à la température d'environnement externe.

9. Dispositif de commande d'un conditionneur d'air, comprenant un capteur de température (601) destiné à collecter une température intérieure t, un capteur d'humidité (602) destiné à collecter une humidité intérieure RH, et une unité microcontrôleur, dite MCU, (603), dans lequel la MCU (603) comprend :

une unité de réglage (6031) configurée, lorsque le conditionneur d'air est dans un mode de refroidissement, lorsque la température intérieure t est supérieure à une première température prédéfinie t1, pour commander une fréquence de fonctionnement d'un compresseur et/ou une vitesse de rotation d'un ventilateur intérieur conformément à une première stratégie de commande ; et lorsque la température intérieure t est inférieure ou égale à la première température prédéfinie t1, pour sélectionner une stratégie de commande correspondante conformément à l'humidité intérieure RH pour commander la fréquence de fonctionnement du compresseur et/ou la vitesse de rotation du ventilateur intérieur, ou, pour commander la fréquence de fonctionnement du compresseur et une position d'un déflecteur d'air conformément à une deuxième stratégie de commande ;

**caractérisé en ce que**

l'unité de réglage (6031) configurée pour commander la fréquence de fonctionnement du compresseur et la position du déflecteur d'air conformément à la deuxième stratégie de commande, exécute l'étape consistant à :

régler la fréquence de fonctionnement F du compresseur à une fréquence spécifiée f1, et régler le déflecteur d'air à une position de sortie d'air maximale,

l'unité de réglage (6031) configurée pour sélectionner la stratégie de commande correspondante conformément à l'humidité intérieure RH pour commander la fréquence de fonctionnement du compresseur et/ou la vitesse de rotation du ventilateur intérieur exécute en outre les étapes consistant à :

lorsque l'humidité intérieure RH est inférieure à une première humidité prédéfinie Rh, commander la fréquence de fonctionnement du compresseur et/ou la vitesse de rotation du ventilateur intérieur conformément à une troisième stratégie de commande ; et

lorsque l'humidité intérieure RH est supérieure ou égale à la première humidité prédéfinie Rh, commander la fréquence de fonctionnement du compresseur et/ou la vitesse de rotation du ventilateur intérieur conformément à une quatrième stratégie de commande,

dans lequel l'étape de commande de la fréquence de fonctionnement du compresseur et/ou de la vitesse de rotation du ventilateur intérieur conformément à la quatrième stratégie de commande consiste à :

appliquer une ou plusieurs corrections à la température cible T pour obtenir une température cible corrigée Tx, dans lequel la température cible T est définie par un utilisateur ;

déterminer la fréquence de fonctionnement F du compresseur conformément à la température cible corrigée Tx, et régler la fréquence de fonctionnement F du compresseur en conséquence ; et

déterminer la vitesse de rotation R du ventilateur intérieur conformément à la fréquence de fonctionnement F du compresseur, et régler la vitesse de rotation R du ventilateur intérieur en conséquence,

dans lequel l'application d'une ou de plusieurs corrections à la température cible T est telle que :

lorsque la correction est appliquée pour la première fois, Tx = T-Dset ; et

lorsque la correction est appliquée pour la deuxième fois et lors de fois suivantes, Tx = Tx1-Dset,

où Tx est une température après cette correction, Tx1 est une température après la correction précédente, et Dset est une valeur de correction.

10. Conditionneur d'air, comprenant un compresseur et un ventilateur intérieur, et comprenant en outre un dispositif de commande du conditionneur d'air selon la revendication 9.

When the air conditioner is in a cooling mode, an indoor temperature t and an indoor humidity RH are collected

S10 1

When the indoor temperature t is greater than a first preset temperature t1, an operating frequency of a compressor and/or a rotational speed of an indoor fan are controlled according to a first control strategy

S10 2

When the indoor temperature t is less than or equal to the first preset temperature t1, a corresponding control strategy is selected according to the indoor humidity RH to control the operating frequency of the compressor and/ or the rotational speed of the indoor fan

S10 3

Fig. 1

When the air conditioner is in a cooling mode, an indoor temperature t and an indoor humidity RH are collected

S20 1

t>t1

No

Yes

RH≥Rh

Yes

No

S20 2

S20 3

S20 4

Operating frequency of the compressor and/or the rotational speed of the indoor fan are controlled according to the first control strategy

Operating frequency of the compressor and/or the rotational speed of the indoor fan are controlled according to a third control strategy

Operating frequency of the compressor and/or the rotational speed of the indoor fan are controlled according to a fourth control strategy

Fig. 2

When the air conditioner is in a cooling mode, an indoor temperature t and an indoor humidity RH are collected ⟋S301

When the indoor temperature t is greater than a first preset temperature t1, an operating frequency of a compressor and/or a rotational speed of an indoor fan is controlled according to a first control strategy ⟋S302

When the indoor temperature t is less than or equal to the first preset temperature t1 and greater than a second preset temperature t2, the operating frequency of the compressor and a position of an air deflector are controlled according to a second control strategy ⟋S303

When the indoor temperature t is less than or equal to the second preset temperature t2, the corresponding control strategy is selected according to the indoor humidity RH to control the operating frequency of the compressor and/or the rotational speed of the indoor fan, and the position of the air deflector is adjusted according to the operating frequency of the compressor or the rotational speed of the indoor fan ⟋S304

Fig. 3

When the air conditioner is in a cooling mode, an indoor temperature t and an indoor humidity RH are collected — S401

t>t1 — No → T2<T≤t1 — No →

RH<Rh — No →

Yes (t>t1) ↓

Yes (T2<T≤t1) ↓

Yes (RH<Rh) ↓

S402
Operating frequency of the compressor and/or the rotational speed of the indoor fan are controlled according to a first control strategy

S403
Operating frequency of the compressor and the position of the air deflector are controlled according to a second control strategy

S404
Operating frequency of the compressor and/or the rotational speed of the indoor fan and the position of the air deflector are controlled according to a third control strategy, and the position of the air deflector is adjusted according to the operating frequency of the compressor or the rotational speed of the indoor fan

S405
Operating frequency of the compressor and/or the rotational speed of the indoor fan and the position of the air deflector are controlled according to a fourth control strategy to control the temperature and humidity, and the position of the air deflector is adjusted according to the operating frequency of the compressor or the rotational speed of the indoor fan

Fig. 4

When the air conditioner is in a cooling mode, an indoor temperature t and an indoor humidity RH are collected — S401

t>t1 — No → t2<T≤t1 — No →

RH<Rh — No →

Yes (t>t1) ↓

Yes (t2<T≤t1) ↓

Yes (RH<Rh) ↓

S402
Operating frequency of the compressor and/or the rotational speed of the indoor fan are controlled according to a first control strategy

S403
Operating frequency of the compressor and the position of the air deflector are controlled according to a second control strategy

S404
Operating frequency of the compressor and/or the rotational speed of the indoor fan and the position of the air deflector are controlled according to a third control strategy, and the position of the air deflector is adjusted according to the operating frequency of the compressor or the rotational speed of the indoor fan

S405
Operating frequency of the compressor and/or the rotational speed of the indoor fan and the position of the air deflector are controlled according to a fourth control strategy to control the temperature and humidity, and the position of the air deflector is adjusted according to the operating frequency of the compressor or the rotational speed of the indoor fan

t3<T≤t2 — Yes →

No ↓

S406
Indoor fan is controlled to run at a maximum rotational speed R

Fig. 5

601

602

Temperature
Sensor

Humidity Sensor

603

MCU

6031

Adjustment unit

Fig. 6

601

602

Temperature
Sensor

Humidity Sensor

603

MCU

6034

Calculation Unit

6031

Adjustment Unit

6033

Switching unit

6032

Receiving unit

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0893657 A1
- US 20120303165 A1
- CN 106839333 A